# EUROPEAN PATENT APPLICATION

(11) **EP 4 733 153 A1**
(43) Date of publication of application: **29.04.2026**
(21) Application number: 24383172.4
(22) Date of filing: 24.10.2024
(51) Int. Cl.: B60S 1/48, B60S 1/56

(54) **CLEANING SYSTEM AND METHOD**

(71) Applicant: Ficosa Automotive, S.L.U., 08232 Viladecavalls (ES)
(72) Inventor: ALCAIDE HERNÁNDEZ, Olallo, 08232 VILADECAVALLS (ES); BELLOT GAYAN, Pol, 08232 VILADECAVALLS (ES)
(74) Representative: ZBM Patents - Zea, Barlocci & Markvardsen

(57) **Abstract**

A cleaning system for a motor vehicle comprising one or more pumps, a manifold, two or more nozzles, a control valve, and a controller. The manifold comprises a first inlet and two or more outlets. The first inlet is adapted for receiving fluid at least from the one or more pumps, wherein each of the one or more outlets of the manifold is in fluid connection at least to a nozzle of the two or more nozzles. Each of the two or more nozzles is adapted for ejecting fluid to a target surface to be cleaned. The control valve is arranged between the manifold and a nozzle. The term between includes, within the meaning of the present application, in the manifold or in the nozzle. Further, the controller is configured at least to operate the one or more pumps to supply fluid to the manifold, and also the control valve to switch from a close position to an open position and vice versa.

## Description

### TECHNICAL FIELD

The present disclosure relates to a cleaning system and method for a motor vehicle configured to eject fluid to a target surface to be cleaned, washed or dried. In particular, the present cleaning system finds application for example in arrangements where a plurality of motor vehicle parts such as optical vehicle sensors are required to be cleaned. The fluid contains cleaning liquid and/or pressurized gas.

### BACKGROUND

In known cleaning systems, fluid is pumped from tanks, reservoirs or fluid sources by suitable pumps and discharged out towards a target surface required to be cleaned through nozzles that are fluidly connected to the pumps.

US20030075207 A1 is a cleaning liquid supply system for cleaning a plurality of target surfaces such as a plurality of headlamps, wherein said cleaning system comprises a tank, two pumps, a manifold, and a plurality of headlamp nozzles fluidly connected to each other. Each of the two pumps is configured to receive the cleaning liquid from the tank and pump it to be discharged to a corresponding headlamp of the vehicle through the corresponding headlamp nozzle. The manifold may be understood as a tube that has at least one or more inlets and two or more outlets, said tube fluidly connecting one or more pumps to two or more headlamp nozzles. An inlet is in fluid connection to a pump and each of the two or more outlets is in fluid connection to a headlamp nozzle. Each of the headlamp nozzles is in fluid communication with the corresponding headlamp of the vehicle to be cleaned.

A drawback of US20030075207 A1 is that when a target surface is required to be cleaned (i.e., is dirty), all target surfaces associated with the headlamp nozzles in fluid connection to the manifold are discharged with cleaning liquid. This results in a high cleaning liquid consumption because two or more target surfaces are discharged with cleaning liquid when possibly only one is required to be cleaned. Therefore, target surfaces that were already cleaned are also unnecessary rinsed with cleaning liquid.

In the automotive industry, more and more vehicle sensors such as camera modules or lidars are being incorporated into motor vehicles to capture data (e.g., image data) of their surroundings. It should be emphasized that when a camera module is being rinsed with cleaning liquid, it does not capture image data of the vehicle surroundings as required (i.e., the cleaning liquid is an optical contamination) until the cleaning liquid is removed.

EP3597491 A1 discloses a sensor cleaning system for a motor vehicle for cleaning a plurality of target surfaces such as a plurality of camera modules or lidars, wherein it comprises a fluid source (e.g., a reservoir), one or more pumps, a manifold, and a plurality of nozzles in fluid connection to each other. EP3597491 A1 further discloses a plurality of control valves such as electromagnetic valves, each arranged between the manifold and a nozzle to allow or prevent cleaning fluid from being ejected through the respective nozzle. In this way, a controller is further provided being configured to select which control valve(s) need(s) to be opened based on a command of washing and generate the signal to open the selected control valve(s). In this way, the cleaning system of EP3597491 A1 only ejects fluid to the target surface(s) that need(s) to be cleaned. Fluid consumption is thus reduced compared to US20030075207 A1.

It has been found that known sensor cleaning systems for a motor vehicle are not capable of verifying that the cleaning system operates as required without any breakage, failure, or loss of performance. In particular, prior art sensor cleaning systems are not configured to determine where the breakage, failure or loss of performance occurs, and/or identify which component is the one responsible for it.

Also, prior art sensor cleaning systems may disadvantageously suffer from overpressure. That is, at least a portion of the sensor cleaning system reaches an excessive pressure value which may damage a part or component thereof. It occurs particularly when the fluid comprises pressurized gas (e.g., compressed air). Known sensor cleaning systems do not deal with a technical solution that aims to reduce overpressure especially when a breakage or failure of the cleaning system occurs.

Furthermore, most of known sensor cleaning systems start operating the pump when a vehicle sensor such as a camera or a lidar is dirty. The ejected fluid has a low pressure at the start of the discharge which results in low cleaning efficiency. Particularly, this type of cleaning system requires a longer time to clean the vehicle sensor than the solution of the present disclosure as well as higher fluid consumption.

### SUMMARY

It is an object of the present disclosure to provide a cleaning system for a motor vehicle that comprises a pump, a nozzle, a control valve, and a controller.

The pump may be one or more pumps. If two, three or more pumps are provided, they may be connected in series or in parallel as required. In operation, the pump may be adapted for supplying fluid. The controller may be configured to operate the pump by a PWM (pulse-width modulation) signal. The PWM signal may be used to control the speed of the pump.

The present cleaning system may further comprise a manifold or fluid distribution or fluid merger. The pump may be in fluid connection to the manifold. In turn, the manifold may be in fluid connection to the nozzle. The manifold may comprise a first inlet and two or more outlets. The first inlet is adapted for receiving fluid at least from the pump (i.e., the one or more pumps). It is possible that the manifold is provided with additional inlets such as a second inlet. The two or more outlets may comprise a first outlet and a second outlet. Of course, additional outlets are not ruled out such as a third outlet.

Furthermore, the nozzle or fluid discharger may be adapted for ejecting fluid to a target surface that is required to be cleaned. Thus, the nozzle is in fluid communication with the target surface. The target surface may be a portion of a sensor to be cleaned, washed, and/or dried. For the purpose of clarity and conciseness, the word "clean" may comprise "clean, wash, and/or dry". An aim of the ejected fluid is to remove any optical contamination or obstacle detected on the sensor, i.e., attached to the target surface of the sensor. The target surface may be one or more target surfaces (i.e., a first target surface and a second target surface). The first and second target surfaces may be the same portion of the (same) sensor or may be different surfaces of the same sensor or may preferably be (different portions of) different sensors. The sensor may be any (optical) vehicle sensor configured to sense information of the vehicle exterior environment. The sensor may be, for example, a camera device or a lidar (light detection and ranging) device. Other type of sensors is of course not ruled out. Preferably, the camera device may be a front camera module, a back-up camera module for manoeuvre purposes, a surrounding view camera module, or a camera module for a digital electronic mirror system, e.g., a side digital mirror system or an interior rear-view mirror system. Other applications are of course possible.

The nozzle may be one or more nozzles. The one or more nozzle may comprise a first nozzle and a second nozzle. The nozzle may be in fluid connection to the pump. Also, the nozzle may be in fluid connection to the manifold, i.e., the nozzle may be in fluid connection at least to one or more outlets of the manifold. In fact, each of the two or more nozzles may be in fluid connection at least to one or more outlets of the manifold. Preferably, the nozzle (e.g., the first nozzle) may be in fluid connection at least to the first outlet of the manifold. Further, a (further) nozzle (e.g., the second nozzle) may be in fluid connection at least to the second outlet of the manifold.

If a third target surface is required to be cleaned, a third nozzle may be provided in fluid communication with the third target surface. The third nozzle may thus be adapted for ejecting fluid to the third target surface. In this way, a detected optical contamination attached to the third target surface may be efficiently removed. The third nozzle may be in fluid connection at least to one or more outlets of the manifold, e.g., a third outlet of the manifold. It is preferred that the cleaning system may further comprise additional nozzles and additional manifold outlets.

The control valve may be or comprise an electromagnetic valve. It is any valve that may be configured to move from a close position to an open position and vice versa in a controlled manner, e.g., by the controller. The open position is to be understood at least partially open or totally open. Therefore, it is possible that the controller may control the control valve where the open position includes different (intermediate) positions, i.e., partially open.

The control valve may be arranged between the manifold and a nozzle. Within the purpose of the present disclosure, the term 'between' includes that the control valve may be arranged in the manifold or in the nozzle. That is, the manifold may comprise the control valve, or the nozzle may comprise the control valve.

The control valve may be one or more control valves. The one or more control valves may comprise a first control valve and a second control valve. Preferably, the first control valve may be arranged between the manifold and the first nozzle, including in the manifold or in the first nozzle. Preferably, the second control valve may be arranged between the manifold and the second nozzle, including in the manifold or in the second nozzle. If the third nozzle is provided, the one or more control valves may comprise a third control valve arranged between the manifold and the third nozzle, including in the manifold or in the third nozzle.

The controller may be configured to operate the pump to supply fluid, e.g., to the manifold. The controller may also operate the control valve to switch from the close position to the open position and vice versa. When two, three or more pumps are provided, the controller may be configured to operate the two, three or more pumps to supply fluid to the manifold as required. When two, three or more control valves are provided, the controller may be configured to switch each of the two, three or more control valves from the close position to the open position and vice versa as required.

The control valve may be normally in the close position (i.e., normally-closed). It prevents fluid to pass through, e.g., from the manifold to the nozzle. The controller may be configured to open the control valve in fluid communication with the target surface that is required to be cleaned, for example, when optical contamination is detected on the target surface. When two or more target surfaces are required to be cleaned, two or more nozzles and two or more control valves may thus be provided. The controller may be configured to set the two or more control valves in the close position to prevent fluid to be discharged or ejected to the respective target surfaces. The controller may be configured to select a selected control valve(s) from the two or more control valves based on which target surface(s) has/have to be cleaned. Further, the controller may be configured to (only) open the selected control valve(s) which is/are associated to the target surface(s) to be cleaned according to a command of washing, i.e., a sensor signal. The rest of the two or more control valves remain closed (i.e., in the close position). In this way, fluid is (only) ejected or discharged through the (selected) nozzle(s) that is/are in fluid communication with those target surfaces where optical contamination has to be removed. As a result, a reduction of fluid consumption is advantageously achieved.

The fluid may be a cleaning fluid. In fact, fluid may be a cleaning liquid and/or pressurized gas, i.e., compressed air. As explained further below, the present cleaning system may be a cleaning liquid discharging system, a pressurized gas discharging system, or a combined discharging system that rinses the target surface(s) with cleaning liquid and pressurized gas. The cleaning liquid and the pressurized gas may be ejected at the same instant of time. Alternatively, the pressurized gas may be ejected at least in an instant of time after the cleaning liquid is prevented from being ejected. When the cleaning liquid and the pressurized gas are ejected at the same time, the removal of optical contamination is more effective and/or fluid consumption is advantageously decreased. The nozzle may receive a first fluid (cleaning liquid) and a second fluid (pressurized gas) separately being mixed in the nozzle, or alternatively the nozzle may receive (and eject) a mixture of the first and second fluids. When the pressurized gas is ejected at least after the cleaning liquid is prevented, liquid such as remaining cleaning fluid, rain, splashed, etc. present on the target surface is easily removed. In other words, liquid being optical contamination is dried or blown away. Furthermore, the pump may be a liquid pump when operating cleaning liquid (i.e., the fluid is cleaning liquid). The pump may also be an air compressor when operating with pressurized gas (i.e., the fluid is compressed air). The one or more air compressors may receive air from an environment of the motor vehicle (i.e., the vehicle exterior environment). That is, from a fluid source. It is therefore possible that the cleaning system may comprise a plurality of pumps such as one or more liquid pumps and one or more air compressors. It will be explained further below when describing a second manifold.

It is preferred that the cleaning system further comprises the fluid source such as a fluid reservoir, hereinafter referred to as a reservoir. The reservoir may comprise one or more tanks. The reservoir or tank may be adapted for storing fluid, e.g., cleaning liquid or pressurized gas. Further, the pump may receive fluid (e.g., cleaning liquid) from the reservoir. Alternatively, the pump may receive fluid (e.g., air) from the vehicle external environment. In any case, the pump may obtain fluid from the fluid source, the fluid source being the reservoir or the vehicle exterior environment. The pump and the reservoir may be fluidly connected to each other by one or more conduit pipes. In short, the reservoir and the one or more pumps are fluidly connected to each other. When the reservoir, i.e., a tank, stores pressurized gas, said tank may be part of the manifold or at very least fluidly connected to the manifold. In other words, the manifold may comprise the tank or be fluidly connected to the tank. The tank that stores pressurized gas may be arranged between the pump and the two or more outlets of the manifold (i.e., the first outlet and the second outlet of the manifold).

Preferably, the cleaning system further comprises a return line. The fluid source, e.g., the reservoir, and the return line may be in fluid connection to each other. Further, the cleaning system may comprise a release valve provided in the return line. That is, the return line may comprise the release valve.

It is preferred that the return line allows fluid contained (at any location) between the pump and the nozzle to flow away. In other words, the return line may be adapted for allowing fluid to flow out of a cleaning segment. The cleaning segment may be defined as a portion of the cleaning system between the pump and the nozzle.

That is, the return line is fluidly connected to a portion of the cleaning system comprised therebetween the one or more pumps and the nozzle(s), for example, therebetween an upstream valve(s) (explained below) and the control valves. More preferably, the return line fluidly connects the cleaning segment and the reservoir. If so, fluid advantageously is not lost. It is even more preferred that return line fluidly connects the manifold (e.g., an outlet of the manifold) and the reservoir. It is possible that the return line may comprise different segments or lines such as a second return line.

Preferably, the cleaning system comprises the upstream valve. The upstream valve may be one or more upstream valves (e.g., a first upstream valve and a second upstream valve). The upstream valve may be arranged between the pump and the manifold, including in a fluid outlet of the pump or in the manifold (itself). More preferably, the first upstream valve may be arranged between a first pump (i.e., a fluid outlet of the first pump) and the manifold. Similarly, the second upstream valve may be arranged between a second pump (i.e., a fluid outlet of the second pump) and the manifold.

It is preferred that the upstream valve is a check valve or one-way valve. Alternatively, the upstream valve may be or comprise a solenoid valve operated by the controller. In any case, fluid is allowed to flow in a direction towards the manifold but prevented to flow in the opposite direction (i.e., from the manifold towards the pump through the upstream valve).

When two or more pumps are provided (and arranged in parallel), then the manifold may comprise the first inlet and the second inlet. If so, the first and second upstream valves may also be provided. The first and second upstream valves prevent fluid in the manifold from flowing back towards the reservoir when at least one pump is not activated. For example, the first pump may be activated thus supplying fluid to the manifold, wherein the second pump may not be activated. The second pump may not be activated, for example, because another pump(s) (e.g., the first pump) is capable of supplying the required amount of fluid and/or the required pressure to clean the target surface(s). Pump fatigue is thus advantageously reduced. Then, the upstream valve associated to the pump that is not activated prevents fluid in the manifold from flowing towards the pump. In other words, the fluid supplied to the manifold by the first pump is subsequently prevented, by the second upstream valve, from flowing from the manifold into the reservoir through the second pump that is not activated.

It is preferred that the cleaning system is pressurized (prior to the fluid discharge). Preferably, at least the manifold is pressurized (in advance, i.e., before the command of washing indicates a target surface requires to be cleaned). As explained, the manifold may comprise the tank that stores pressurized gas in advance. The pump (i.e., the one or more pumps) may be adapted for providing fluid to a portion of the cleaning system (e.g., into the manifold) to be pressurized such that, in use, (a portion of) the cleaning system (e.g., the manifold) accumulates pressure. In fact, the manifold accumulates pressure before the target surface(s) is/are required to be cleaned. In operation, a portion of the cleaning system (e.g., the manifold) accumulates pressure when the control valve(s) is/are in the close position. Preferably, a portion of the cleaning system (e.g., the manifold) accumulates pressure when the first control valve and the second control valve are in the close position. Also, the upstream valve(s) may be employed when the cleaning system (e.g., the manifold) is pressurised. It prevents fluid in a portion of the cleaning system (e.g., the manifold) from flowing away through said upstream valve(s) when the cleaning system (e.g., the manifold) is under pressurization. Further, a portion of the cleaning system (e.g., the manifold) accumulates pressure when the release valve in the return line prevents fluid in the cleaning segment (e.g., the manifold) from passing through thereof. As a result, fluid does not flow out of the manifold. In short, for the purpose of (manifold) pressurization, the controller may be configured to close the control valve(s) (e.g., the first and second control valves) and, optionally, the release valve in the return line when provided and if controlled by the controller and, more optionally, the upstream valve(s) (e.g., the first and second upstream valves) when provided and comprising the solenoid valve. When the upstream valve(s) and/or the release valve is/are not controlled by the controller (i.e., the upstream valve(s) and/or the release valve is a mechanical valve), then the cleaning system, e.g., the manifold, is pressurized to the predetermined pressure level that the upstream valve(s) and/or the release valve is/are allowed to take. The mechanical valve may be a valve that when fluid exceeds a predetermined pressure level causes a movement of a valve member allowing the fluid to pass through.

The accumulated pressure is obtained when the pump supplies (or has supplied) fluid to the manifold and does not pass through the control valve(s) and the upstream valve(s) and the release valve when provided. When the fluid is cleaning liquid, the fluid occupies all or at least part of the manifold. In any case, the fluid (either cleaning liquid or pressurized gas) may advantageously be stored / trapped within the manifold therebetween the above-mentioned valves.

The pump (i.e., the one or more pumps) may be adapted for supplying fluid at least in an instant of time:
- after the control valve(s) is/are closed for at least a predefined time so as to ensure the manifold is pressurized to a predetermined pressure level, and/or
- after sensing a flow parameter of the fluid in the fluid circuit (e.g., a sensed pressure in the manifold reaches the predetermined pressure level).

The cleaning system may further comprise a fluid sensor. The fluid sensor may be configured to sense at least one measurement of a (flow) parameter (i.e., pressure, speed, flow rate, etc) of the fluid. The (flow) parameter may be a flow parameter in the fluid circuit. The fluid circuit of the cleaning system may be at least one of:
- an upstream circuit of the manifold;
- a downstream circuit of the manifold; and
- the manifold.

The upstream circuit of the manifold may be defined as a circuit that includes a direction against the flow of the fluid from the manifold (perspective). It may have a pressure equal to or higher than the manifold. The upstream circuit of the manifold may be:
- a portion therebetween the pump(s) and the manifold; or preferably,
- a portion therebetween the upstream valve(s) and the manifold.

The downstream circuit of the manifold may be defined as a circuit that includes a direction towards the flow of the fluid from the manifold (perspective). It may have a pressure equal to or lower than the manifold. The downstream circuit of the manifold may be at least one of:
- a portion therebetween the manifold and the nozzle(s);
- a portion therebetween the manifold and the control valve(s);
- a portion therebetween the control valve(s) and the nozzle (s); and
- a portion of the return line.

Preferably, the fluid sensor is a pressure sensor. More preferable, the pressure sensor is configured to sense the sensed pressure, for example, in the fluid circuit (e.g., in the manifold) and transmit the sensed pressure to the controller. As explained, the controller may operate the pump and at least the control valves(s) for the manifold to reach the predetermined pressure level. The predetermined pressure level may be up to 8 bar, preferably, up to 6 bar, preferably between 0.5-6 bar.

The controller may be configured to receive or determine the command of washing or sensor signal. The sensor signal may comprise a detection of the optical contamination on the target surface or at least the need to clean the target surface(s). Preferably, the sensor signal further comprises an ambient condition parameter and/or a motor vehicle parameter.

The ambient condition parameter may comprise: level of rain, ambient temperature, ambient humidity, wind speed, and/or wind direction. Further, the motor vehicle parameter may comprise: a motor vehicle speed, vehicle altitude location, and global positioning. The controller may take into account one or more parameters of the cleaning system such as fluid reservoir level, fluid temperature, and/or the above-mentioned measurement of the flow parameter of the fluid. Furthermore, the controller may take into account a level of any additives to be added to the (cleaning) fluid such as an antifreeze medium, for example, alcohol.

Furthermore, the controller may be configured to:
- evaluate the sensor signal to select a predetermined cleaning profile from a plurality of predefined cleaning profiles based on the sensor signal, and
- operate the control valve and/or the pump in continuous or alternating pulse mode depending on the selected predetermined cleaning profile in order to remove the optical contamination of the target surface(s).

For example, the controller receives a sensor signal where optical contamination is detected in the first and third target surfaces. Accordingly, the second control valve remains closed, wherein the first and third control valves are selected to be opened (i.e., from the close position to the open position). Also, the sensor signal comprises the vehicle speed and the rain intensity level. From these data inputs (i.e., sensor signal), the controller selects a predetermined cleaning profile from the plurality of predefined cleaning profiles. The selected predetermined cleaning profile may take into account the size of the target surface(s) to be cleaned (since it is not the same to clean a camera module, a protective cover of a camera module, or a lidar). Also, the selected predetermined cleaning profile may take into account the location of the target surface within the motor vehicle and/or the importance/priority of the vehicle sensor associated with the target surface(s) to be cleaned (e.g., the camera module of the digital rear-view mirror may be assigned with a higher priority than a back-up camera module when the vehicle is driving on the highway, e.g., above a pre-saved vehicle speed). The selected predetermined cleaning profile may be the cleaning profile that best fits on the basis of the data inputs (i.e., sensor signal). Based on the selected predetermined cleaning profile, the controller is further configured to operate the control valve and/or the pump as required. For example, the activation of the second pump may be enough to provide the required amount of fluid to the first and third target surfaces at the required pressure. If so, the first pump may not be activated. Also, as vehicle speed increases, cleaning time and/or fluid pressure may (accordingly) change, e.g., increase or decrease. Further, if rain is detected, the supply of (only) air (i.e., not cleaning liquid) is preferred. The presence of rain may cause the controller to operate the control valve and/or the pump longer than if it were a splash (i.e., continuous air mode may be selected when rain is detected). As the rain intensity level increases, cleaning time and/or air pressure may (accordingly) change, e.g., increase or decrease. For example, if the vehicle speed and/or the rain intensity level increase(s), the controller may be configured to operate also the first pump if the second pump cannot supply the required amount of fluid and/or fluid pressure required in the (updated) predetermined cleaning profile.

It is preferred that the fluid (either cleaning liquid and/or pressurized gas) is ejected with a pulse. For this, the controller may be configured to operate the control valve for the nozzle to eject fluid to the target surface at an alternating pulse. The pulse or alternating pulse may be defined as a non-continuous jet of fluid. The alternating pulse may be obtained by opening and closing the control valve (in a sequence manner). In this way, the cleaning liquid and/or the pressurized air is/are ejected with a cleaning cycle. The cleaning cycle may comprise: opening (ON), closing (OFF) the control valve repeatedly N times, being N two or more. For example, the cleaning cycle consists of at least: ON-OFF-ON-OFF of the control valve. The opening (ON) has a duration of less than 2 seconds, for example, 0.1 to 1.5 seconds. The amount of fluid ejected during the opening (ON) may be of between 0.05 and 15 cm3, preferably, between 0.1 and 10 cm3, more preferably, 0.2 and 5 cm3.

In short, as the fluid is being stored in the manifold, the fluid pressure may increase until it reaches a predetermined pressure level. The fluid stored in the manifold is pulsed based on an action of the control valve(s).

The applicant has identified that the pulse together with the manifold pressurization have a synergistic effect. It is possible that a continuous jet of fluid may not be effective enough for removing the optical contamination. Higher pressure may not be achieved by the pump(s), or unfortunately may take certain time to achieve the required pressure. In automotive applications, the time required to reach the required pressure may play a critical role for safety reasons. While the required pressure is being reached, there is a waste of fluid, as the ejected fluid does not initially have the required pressure. The alternating pulse may provide an improved cleaning. However, if the fluid is not pressurized before being ejected, the alternating pulse may not be as effective as if previously pressurized. In fact, the alternating pulse may still take certain time to eject fluid at the required pressure. As the present invention incorporates the fluid pressurization and the alternating pulse, the OFF stage of the pulse (i.e., when the control valve is in the close position) allows at least partially maintaining the fluid pressurization (or even increasing fluid pressurization because fluid is not ejected and the pumps(s) may still supply fluid). In this way, the first ON stage of the pulse is already at the required pressure, so no waste of fluid occurs. In turn, the OFF stage helps to at least partially maintain the fluid pressurization. A great advantage of the manifold pressurization together with the pulse of the fluid is that the total time for the different ON stages may be advantageously reduced and, as a consequence, less fluid is employed. In short, the combination of the pressurization and the pulse provides the effect of saving fluid and reducing cycle time, since when the system is pressurized, the output pressure is much higher, so that from the first moment the fluid already cleans as required, achieving a faster and more efficient cleaning cycle.

Preferably, the controller is configured to select a predetermined speed and/or duration of the (alternating) pulse from a plurality of predefined pulse speeds based at least on the sensor signal. The plurality of predefined pulse speeds is saved in (a memory of) the controller. In means that the speed of the pulse and/or the duration of the pulse is adjusted at least on the basis of the ambient condition parameter and/or the motor vehicle parameter. The efficiency of removing optical contamination is improved since, for example, the (speed and/or duration of the) pulse may be controlled by the controller at least based on the target surface to be rinsed (size, application of the sensor, and optical contamination type as explain below), the vehicle speed, and rain data (e.g., rain intensity level). The controller may be also based on the location of the target surface to be cleaned or whether it is placed in an accessible or non-accessible location from the outside.

The type of optical contamination may be determined. In fact, the determined optical contamination type that is comprised or derived from the sensor signal. The optical contamination type may comprise a first type which contains water and a second type which does not contain water. The controller may be configured to select a predetermined speed and/or duration of the alternating pulse from a plurality of predefined pulse speeds based at least on the determined first or second optical contamination types. In other words, the pulse (speed and/or duration) may be controlled by the controller at least based on whether the optical contamination contains water or not.

The alternating pulse may comprise a first pulse mode and a second pulse mode. The second pulse mode ejects fluid (in the ON stage) at higher flow rate than the first pulse mode. Further, the ON stage of the first pulse mode may be longer than the ON stage of the second mode. The cleaning cycle of the second pulse mode is shorter than the cleaning cycle of the first pulse mode. The first pulse mode and the second pulse mode may be selected based at least on a motor vehicle parameter (e.g., the vehicle speed), and/or an ambient condition parameter, for example, the rain data (e.g., rain intensity level). If rain and optical contamination are not detected, the cleaning system may not eject fluid. If rain is detected and the rain intensity level does not exceed a pre-saved value, the controller may select the continuous mode. If rain is detected and the rain intensity level and/or the vehicle speed exceeds the pre-saved value, the controller may select the first pulse mode. If optical contamination is detected other than rain (e.g., the above-mentioned second type), the controller may select the second pulse mode.

The cleaning system may further comprise a second manifold. The second manifold may distribute a second fluid. The second fluid may be different from the fluid of the (first) manifold (i.e., first fluid). The (first) fluid may be cleaning liquid, wherein the second fluid may comprise pressurized gas. A liquid pump may be adapted for supplying the (first) fluid to the (first) manifold, wherein an air compressor may be adapted for supplying the second fluid to the second manifold. The second manifold may comprise a first air inlet and two or more air outlets. The first air inlet may be adapted for receiving the second fluid at least from the one or more air compressors. Each of the two or more air outlets is fluidly connected to an air nozzle. Each air nozzle is adapted for ejecting the second fluid to a target surface. Preferably, said target surface may be the same target surface of the (first) manifold. That is, the target surface is in fluid communication with the nozzle of the (first) manifold and the air nozzle of the second manifold. A control valve device may be arranged between the second manifold and an air nozzle, including in the manifold or in the air nozzle. In this way, the controller may be configured to operate also the one or more air compressors to supply the second fluid to the second manifold, and the control valve device to switch from a close position to an open position and vice versa. Further, the pulse or alternating pulse of the second fluid is caused by opening and closing the control valve device. The pressurized air is provided to the target surface when the control valve device is in the open position, wherein the pressurized air is prevented from being ejected when the control valve device is in the close position. The cleaning cycle of the second manifold may comprise: opening (ON2), closing (OFF2), opening (ON2) and closing (OFF2) the control valve device. The opening (ON2) has a duration of less than 2 seconds, for example, 0.1 to 1.5 seconds.

When the cleaning system comprises the (first) manifold and the second manifold, the cleaning cycle may comprise:
- opening (ON2) the control valve device, for ejecting the second fluid onto the target surface at least in an instant of time after the first fluid (OFF) is prevented from being ejected, the second fluid being ejected within a predefined time threshold; and
- optionally, closing (OFF2) the control valve device,
wherein the cleaning cycle further comprises a repetition of the above at least N times within a predetermined repetition time threshold, N being two or more times. The predefined time threshold may be shorter than the predetermined repetition time threshold. The predetermined repetition time threshold may have a duration of between 0.1 and 2 seconds. Preferably, the predefined time threshold has a duration of less than 0.6 seconds.

According to an aspect of the present disclosure, a method of operation for a cleaning system is provided herein. The method comprises:
- providing a control valve in a close position;
- operating a pump to supply fluid, the pump being in fluid connection to the manifold;
- optionally, accumulating fluid in the cleaning system, e.g., in the manifold, which preferably comprises supplying fluid into the manifold (the manifold may include a tank that stores pressurized gas) at least when the control valve is in the close position:
   ∘ for at least a predefined time, or
   ∘ until at least one measurement of a flow parameter of the fluid in the fluid circuit of the cleaning system reaches a predetermined pressure level;
- receiving or determining a sensor signal (preferably after accumulating fluid in the cleaning system), wherein the sensor signal comprises a detection of an optical contamination on the target surface, and optionally at least one of an ambient condition parameter and a motor vehicle parameter;
- optionally, operating the pump to supply fluid to the manifold at least in an instant of time after receiving or determining the sensor signal;
- optionally, evaluating the sensor signal to select a predetermined cleaning profile from a plurality of predefined cleaning profiles based on the sensor signal;
- selecting a selected control valve in fluid connection to a nozzle that is in fluid communication with the target surface to be cleaned (e.g., where the optical contamination is detected);
- opening the selected control valve so as to remove the optical contamination of the target surface;
- optionally, operating the selected control valve and/or the pump for ejecting fluid at an alternating pulse; and
- optionally, operating the selected control valve and/or the pump depending on the selected predetermined cleaning profile.

It is preferred that some or all of the above-mentioned steps are performed in the specified sequential order.

According to an aspect of the present disclosure, the present cleaning system may be configured to determine whether the system is functioning well or not. And to determine the cause of a malfunction. For example, the cause of the malfunction may be a malfunction of the pump, the control valve, or obstruction of the nozzle. Alternatively or additionally, the cleaning system may prevent damage to the system when the fluid disadvantageously generates an overpressure. It should be noted the difference between the above-mentioned (manifold) pressurization and the overpressure. The (manifold) pressurization may be advantageous since the cleaning (or drying) of the target surface is more effective. However, said overpressure may damage one or more components of the cleaning system. Such overpressure is generated by the fluid when one or more components of the cleaning system do not operate as required because of a malfunction. For example, the controller generates a control signal to the control valve to switch from the close position to the open position, and also instructs the pump to supply fluid. In this case, when the control valve is damaged and does not open as required, the fluid cannot flow away (be ejected) and consequently the pressure undesirably increases to an excessive pressure (i.e., overpressure) that could be dangerous for or could damage another component of the system (e.g., the connecting tubes between the manifold and the control valve, the manifold, or the pump).

It is worth noting that features stated in previous aspects (e.g., the pump(s), the upstream valve(s), the manifold(s), the control valve(s), the control valve device(s), the nozzle(s), the upstream valve(s), the return line, the release valve, the reservoir, the selection of a predetermined cleaning profile, the manifold pressurization, the alternating pulse of the ejected fluid, etc.) may freely be combined with the features of the present aspect and vice versa.

For the purpose of releasing or preventing an overpressure, the cleaning system comprises the above-mentioned:
- return line; and
- release valve provided in the return line,
such that, in use, the release valve may be configured to allow fluid to flow out of the cleaning segment. As stated above, the cleaning segment may be defined as a portion of the cleaning system between the pump and the nozzle.

The release valve may be configured to allow fluid to pass through thereof in relation to a flow parameter of the fluid in the fluid circuit of the cleaning system. More preferably, the flow parameter of the fluid is at least one of pressure, speed of the fluid, and flow rate.

In use, the release valve may be configured to allow fluid to pass through thereof when pressure of the fluid in the fluid circuit is equal to or higher than a pre-defined overpressure value.

The pre-defined overpressure value may thus be the pressure of the fluid circuit. For example, the pre-defined overpressure value may be the pressure of
(i) the location between the pump and the nozzle (preferably, between the upstream valve and the nozzle, optionally, between the manifold and the nozzle, more preferably, in the manifold); and/or
(ii) the return line (e.g., between the release valve and the manifold).

Said pre-defined overpressure value (indicative of system overpressure) may be greater than the predetermined pressure level (e.g., for the manifold pressurization). Preferably, the pre-defined overpressure value may be at least 0.5 bar higher than the predetermined pressure level (e.g., for the (manifold) pressurization). For example, the pre-defined overpressure value may be above five bar such as eight bar or more.

The above-mentioned fluid sensor may be configured to sense at least one measurement of the flow parameter of the fluid in the fluid circuit of the cleaning system. In this way, a pressure of the fluid in the fluid circuit may be obtained or derived therefrom.

As stated above, the release valve may be an electro-valve or, alternatively, a mechanical valve. The electro-valve may be thus operated by the controller. When the pressure of the fluid in the fluid circuit is equal to or higher than the pre-defined overpressure value, the controller operates the release valve to open. In other words, when the controller receives or determines the pre-defined overpressure, then operates the release valve to open so as to reduce at least pressure in the cleaning segment (e.g., in the manifold). Alternatively, when the release valve is the mechanical valve, the release valve is designed to be opened at the pre-defined overpressure value. In simple words, if it is desired that the cleaning system does not exceed, for example, 8 bar, then the release valve is configured to open when reaching 8 bars of pressure.

For example, if the fluid sensor senses a pressure in the manifold that exceeds the pre-defined overpressure value, e.g., 5 bar, the controller opens the electro-valve of the release valve. The controller may be configured to open the electro-valve due to overpressure during a pre-saved time period (e.g., 0.5 seconds). Instead, if the release valve is a mechanical valve, the release valve is adapted to allow fluid to flow through when fluid reaches the pre-defined overpressure value, e.g., 8 bar. In any case, fluid flows out of the manifold so the pressure in the manifold is advantageously reduced. An advantage when the release valve comprises the electro-valve is that the controller may keep it open until pressure in the manifold reaches a desired pressure, for example, the predetermined pressure level, e.g., 3.5 bar. As stated, the pressure in the manifold may be understood as the pressure in the above-mentioned fluid circuit, for example, therebetween the pump (or the upstream valve(s) when provided), the control valve(s), and the release valve (when provided).

The controller may be configured at least to determine or receive a ((mal)functioning) status of the control valve. The status of the control valve is a determination whether the control valve is functioning as required or not (malfunctioning). For this, the controller may receive or determine the electric power consumption of the control valve (e.g., voltage and electric current). Alternatively, the control valve may communicate to the controller that it is not performing as required.

The controller may be further configured at least to determine blockage of the nozzle based at least on
(i) the flow parameter of the fluid in the fluid circuit of the cleaning system, and
(ii) the ((mal)functioning) status of the control valve.

Optionally, the controller may determine blockage of the nozzle also based on the ((mal)functioning) status of the pump.

In simple words, when the controller activates the pump and also receives or determines that the control valve(s) is/are performing as required (not malfunctioning) and the determined pressure of the fluid in the fluid circuit (e.g., in the manifold) is increasing or exceeds the pre-defined overpressure value (indicative of system overpressure), then the controller determines (assumes) that the nozzle(s) is/are at least partially obstructed or blocked. The malfunction of the control valve may be considered at least when the controller sends the control signal to the (selected) control valve to open and it does not. Therefore, when the pump(s) is/are activated, the (selected) control valve(s) is/are instructed to be opened, and the fluid pressure in the fluid circuit (e.g., in the manifold) is above the pre-defined overpressure value, the controller determines the nozzle(s) is/are totally or partially blocked.

Instead of using the determined pressure in the manifold to determine the blockage of the nozzle, the controller may use another flow parameter of the fluid such as flow rate. For example, if the pumps(s) is/are activated, the control valve(s) is/are opened, and the flow rate in the return line is detected downstream the release valve, then the controller assumes that the nozzle(s) is/are at least partially obstructed. In this case, it is to be noted that the release valve may be opened when the pressure upstream thereof is equal to or higher than the pre-defined overpressure value that, as explained, may optionally be higher than the predetermined pressure level by at least 0.5 bar.

Knowing about the blockage of the nozzle may be of vital importance at least because of two reasons. Firstly, if the nozzle is blocked, the target surface may not end up being cleaned as required. Secondly, if the nozzle is blocked and the pump is activated, the cleaning system (e.g., the manifold) may suffer overpressure. There may be different reasons for blockage of the nozzle. A reason may be that remaining droplets of cleaning liquid remain in the nozzle after fluid is ejected and when the temperature drops, they freeze, forming an obstruction made of ice. Instead of remaining droplets of cleaning liquid, there may be water of the vehicle exterior environment such as rain o moisture. Other reasons are of course possible such as foreign matter (i.e., dirt) attached to the nozzle(s).

When the controller determines that the nozzle is blocked, the controller may be further configured that once the sensor signal indicates that a target surface is dirty or has an optical contamination, not to generate a cleaning signal (i.e., not to activate the pump and/or open the control valve(s)). Instead, the controller may be configured to generate an output that comprises at least one of:
(a) activating a heater associated to the nozzle when the sensed temperature is below a pre-saved temperature (e.g., freezing temperature);
(b) activating / deactivating an autonomous driving instruction (e.g., auto-park instruction); and
(c) providing an alarm to the user or driver (of the motor vehicle).

The pre-saved temperature may be loaded in (the memory of) the controller. The sensed temperature may be a temperature of the vehicle exterior environment. The sensed temperature may be below 5°C. Preferably, equal to or below 0°C. That is, if the controller determines that the nozzle is blocked / obstructed, and the sensed temperature is, for example, -5°C (below the pre-saved temperature), the controller may generate an output to activate the heater associated to the nozzle to warm up the nozzle. The aim is to dissolve the ice blockage of the nozzle.

The cleaning system may further comprise a fluid temperature sensor. When the fluid is pressurized gas, the fluid temperature sensor is configured to sense a temperature of the pressurized gas. The controller may be further configured to determine if the temperature of the pressurized gas is equal to or above a pre-established gas temperature. Said pre-established gas temperature such as 80°C may be saved in the controller. Other temperature values other than 80°C is of course possible. If the controller determines that the temperature of the pressurized gas is equal to or above the pre-established gas temperature, then the controller may be further configured to stop the pump and/or open at least one of the control valve (e.g., the first and/or second control valves), the release valve, or a pressure reducer (explained further below in the description of the drawings) for allowing pressurized gas to flow out of the fluid segment in order to reduce the pressure of the pressurized gas in the cleaning system and the temperature thereof. In operation of the cleaning system, it is possible that pressurized gas stored in the manifold increases its temperature too much. This may be due to the fact that pressurization of the gas tends to increase its temperature and possibly also to the high temperature outside the motor vehicle (i.e., hot weather). Depressurizing the cleaning system when the temperature of the pressurized gas is equal to or above the pre-established gas temperature helps reduce fluid temperature and prevents overheating of the cleaning system.

According to an aspect of the present disclosure, a method of operating a cleaning system is provided. The method comprises:
- providing a control valve in a close position, the control valve being in fluid connection to a nozzle and arranged between a manifold and the nozzle, including in the manifold or in the nozzle;
- receiving or generating, by a controller, a sensor signal (i.e., a cleaning signal or command of washing);
- preferably, operating a pump, optionally, by generating a pulse-width modulation (PWM) signal;
- selecting a selected control valve in fluid connection to a nozzle that is in fluid communication with the target surface required to be cleaned;
- opening the selected control valve for ejecting fluid so as to remove the optical contamination on the target surface;
- preferably, sensing at least a (flow) parameter of the fluid (pressure, speed, flow rate, etc) in the above-mentioned fluid circuit;
- preferably, determining, by the controller, the amount of fluid and/or fluid pressure required to clean the target surface;
- preferably, allowing fluid to pass through a release valve for flowing out of a cleaning segment in relation to the flow parameter of the fluid in the fluid circuit, the cleaning segment being defined as a portion of the cleaning system between the pump and the nozzle, optionally, the flow parameter of the fluid is pressure so that the fluid is allowed to flow away when fluid pressure at least between the pump and the nozzle is equal to or higher than a pre-defined overpressure value;
- preferably, determining or receiving a ((mal)functioning) status of the control valve;
- preferably, determining or receiving a ((mal)functioning) status of the pump;
- preferably, determining blockage of the nozzle based at least on
   (i) the sensed flow parameter of the fluid, and
   (ii) the ((mal)functioning) status of the control valve, and
   (iii) optionally, the ((mal)functioning) status of the pump;
- preferably, sensing a temperature (of the vehicle exterior environment); and
- generating an output that comprises at least one of:
   (a) activating a heater associated to the nozzle when the sensed temperature is below a pre-saved temperature (e.g., freezing temperature);
   (b) activating / deactivating an autonomous driving instruction; and
   (c) providing an alarm to the user or driver (of the motor vehicle);
- preferably, sensing a temperature of the fluid, the fluid being pressurized gas;
- preferably, determining if the temperature of the pressurized gas is equal to or above a pre-established gas temperature and, if so,
- preferably, allowing pressurized gas to flow out of the fluid segment and/or stopping the pump (130) to reduce the pressure of the pressurized gas in the cleaning system and the temperature thereof.

### BRIEF DESCRIPTION OF THE DRAWINGS

Non-limiting examples of the present disclosure will be described in the following, with reference to the appended drawings that show various examples of the cleaning sensor system.
Figure 1 is a top view illustration of a motor vehicle including a cleaning system, wherein fluid is particularly cleaning liquid;
Figure 2 is a top view illustration of a motor vehicle including the cleaning system, wherein the fluid is particularly pressurized gas;

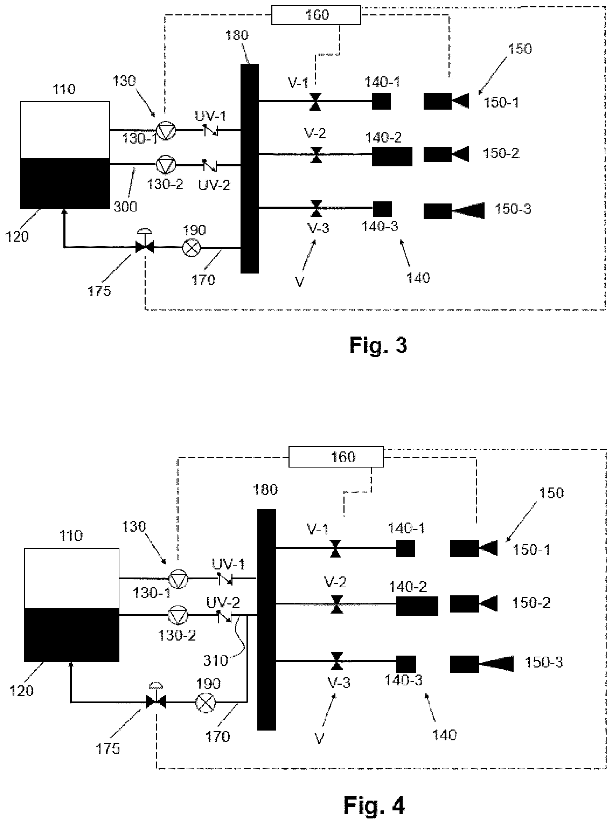

Figure 3 is a schematic view of the cleaning system that shows a reservoir containing fluid (either cleaning liquid and/or pressurized gas), two pumps connected in parallel for receiving cleaning fluid from the reservoir, two upstream valves being check-valves, each arranged between a pumps and a manifold, the manifold comprising two inlets and three outlets, the two inlets in fluid connection with the two pumps and the three outlets for providing cleaning fluid to three nozzles, three control valves being electro-valves each arranged between the manifold and a nozzle, the three nozzles being in fluid communication with the target surfaces to be cleaned, a return line fluidly connecting the manifold to the reservoir, a release valve arranged in the return line, a fluid sensor configured to sense at least one measurement of the flow parameter of the fluid such as pressure, speed, or flow rate in a fluid circuit, and a controller being configured to receive a command of washing or sensor signal, the controller being electrically connected to the two pumps, the three control valves, the release valve, and the fluid sensor;
Figure 4 is a schematic view similar to figure 3, wherein the return line includes a first end in fluid connection with and arranged at a conduit hose that fluidly connects an upstream valve to the manifold;
Figure 5 is a schematic view similar to figure 3, wherein the return line includes a first end in fluid connection with and arranged at a conduit element that fluidly connects the manifold to a control valve;
Figure 5A is a schematic view similar to figure 3, wherein the return line includes a first end in fluid connection with and arranged at a conveying element that fluidly connects a control valve to a nozzle;
Figure 5B is a schematic view similar to figure 3, wherein the return line includes a first end arranged at a control valve that is, according to a non-limiting example, a three-way valve;
Figure 6 is a schematic view similar to figure 3, wherein the release valve is a mechanical valve (not a solenoid valve as figures 1-5B) that when fluid exceeds a predetermined pressure level causes a movement of a valve member (without being instructed by the controller) allowing the fluid to pass through from the manifold to the reservoir;
Figure 7 is a schematic view similar to figure 3, wherein the fluid sensor comprises three fluid sensors, each fluidly arranged between a control valve and a nozzle;

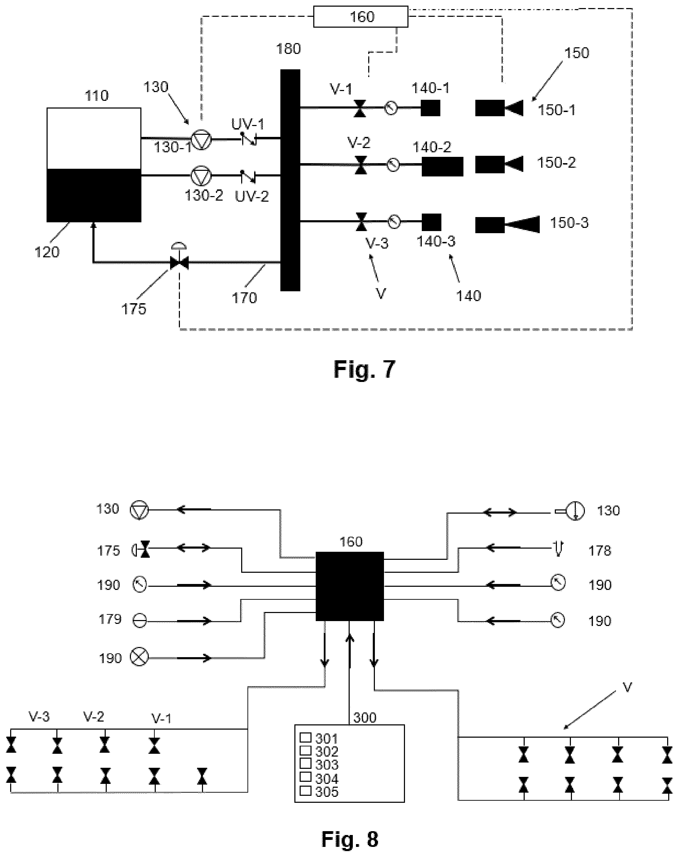

Figure 8 is a schematic illustration where the cleaning system operates with cleaning liquid and pressurized gas, wherein it shows that the controller stores data such as an amount of fluid and/or pressure required to clean a target surface, and wherein the controller is electrically connected to different components of the cleaning system such as the pump, the control valves, the above-mentioned fluid sensor, and also to a device that provides the vehicle speed, a rain sensor providing different levels of rain, a temperature sensor device to provide an external temperature of the motor vehicle, and a vehicle sensor that provides height (altitude) of the motor vehicle or barometric pressure;
Figure 9 is a perspective view of an example of the manifold of previous figures, wherein it shows two housing parts of the manifold provided with five inlets and five outlets respectively, in accordance with a non-limiting example;
Figure 10 is a disassembled view of the manifold of Figure 9, in accordance with a non-limiting example;
Figure 11 is a partial cross-sectional perspective view of the manifold of Figure 9 taken through the line 6-6 depicting an upstream valve being a check valve of the manifold in a close position, in accordance with a non-limiting example;
Figure 12 is a cross-sectional side view of the manifold of Figure 9 taken through the line 6-6, in accordance with a non-limiting example; and
Figures 13A-13D are different schematic illustrations that illustrate at what instant of time pressurized gas is provided with respect to cleaning liquid, in accordance with non-limiting examples.

### DETAILED DESCRIPTION OF EXAMPLES

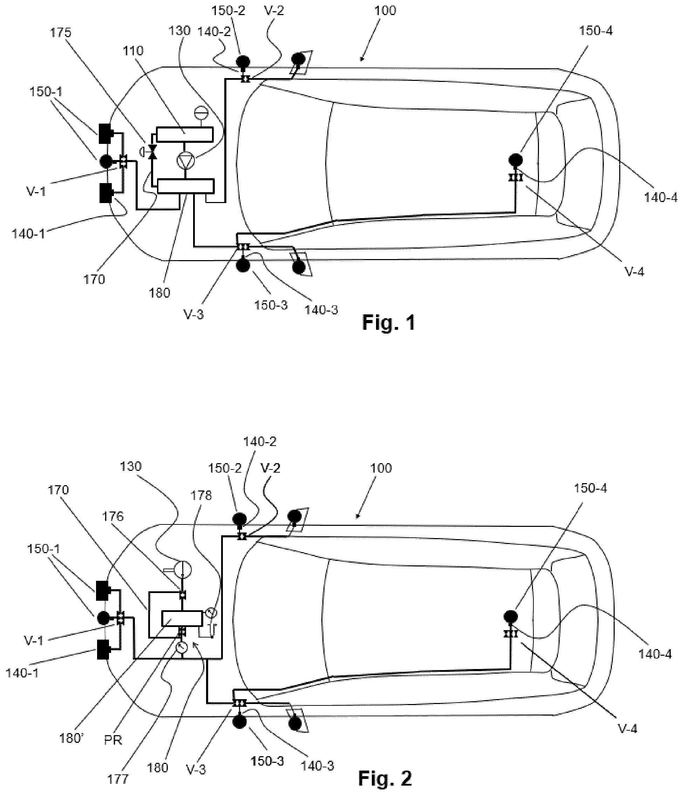

Figures 1 and 2 show a motor vehicle 100 comprising a cleaning system. The cleaning system is a sensor cleaning system for motor vehicles. That is, a vehicle sensor cleaning system. The motor vehicle 100 comprises a plurality of vehicle sensors such as camera modules, lidar devices, radar devices, etc. The vehicle sensors are configured to capture a scene of the vehicle exterior environment. If optical contamination is present or attached to the vehicle sensors, the captured scene may be disadvantageously prevented or at least affected. In simple words, if dirt, pollution, powder, splashes, rainwater, remaining droplets of cleaning fluid, malicious paintings, insect bodies or any other organic obstruction, etc. is placed on a vehicle sensor, for example, a camera module, then said camera module may not capture images of the vehicle exterior environment as required. The present sensor cleaning system aims to remove said optical contamination.

The optical contamination is attached to an outermost portion of the vehicle sensor exposed, i.e., in direct contact, to the vehicle exterior environment. It should be noted that some camera modules, lidar devices, radar devices, etc. may be provided with a (glass) protective cover that at least partially encloses optical elements of the vehicle sensor such as a lens. In this case, the outermost portion of the vehicle sensor is an exterior surface of the protective cover.

A target surface 150 is a surface of a portion of the vehicle sensors that needs to be cleaned, washed or dried. That is, the vehicle sensor comprises the target surface 150.

Figures 1 and 2 show a sensor cleaning system that particularly ejects cleaning liquid and pressurized gas respectively to the plurality of vehicle sensors. The plurality vehicle sensors therefore comprise two or more target surfaces 150-1, 150-2, 150-3, 150-4. As shown, a first target surface 150-1 is arranged at front of the motor vehicle 100 pointing at least to a front area of the vehicle exterior environment. The first target surface 150-1 may be a stereo camera module or a front camera module for a surrounding view system. A second target surface 150-2 is arranged at a right side of the motor vehicle 100 pointing at least to a side adjacent area of the vehicle exterior environment. A third target surface 150-3 is arranged at a left side of the motor vehicle 100 pointing at least to a side adjacent area of the vehicle exterior environment. The second and third target surfaces 150-2, 150-3 are camera modules for a right and left rear-view mirror systems respectively and/or for the surrounding view system. When the camera modules are employed for the right and left rear-view mirror systems, the above-mentioned protective cover may be provided. If so, the second and third target surfaces 150-2, 150-3 are the protective covers. A fourth target surface 150-4 is arranged at a rear portion of the motor vehicle 100 pointing at least to a rear area of the vehicle exterior environment. The fourth target surface 150-4 may be a camera module for an interior rear-view mirror system and/or a rear camera module for the surrounding view system. When the camera module is employed for the interior rear-view mirror system, it is located on the roof of the motor vehicle. When the rear camera module of the fourth target surface 150-4 is employed for the surrounding-view system, it is located at or near the rear bumper. Further, when the front camera module of the first target surface 150-1 is employed for the surrounding-view system is located in the front bumper. The fourth target surface 150-4 may alternatively be a back-up camera for maneuver purposes. If so, it is located at or near the rear bumper.

Figure 1 shows the sensor cleaning system employs a first fluid. The first fluid is cleaning liquid. The cleaning liquid comprises water and soap or cleaning additives. The pump 130 is a liquid pump and the ejected fluid to the target surface 150 is cleaning liquid. Instead, figure 2 shows a sensor cleaning system using a second fluid. The second fluid comprises pressurized gas, e.g., compressed air. The air may be obtained from the vehicle exterior environment. Still in figure 2, the pump 130 comprises an air compressor and the ejected fluid to the target surface 150 is pressurized gas.

As shown in figures 3-7, the sensor cleaning system comprises one or more pumps 130-1, 130-2, a manifold 180, two or more nozzles 140-1, 140-2, 140-3, two or more control valves V-1, V-2, V-3 and the controller 160. Figures 1 and 2 further show a fourth control valve V-4 in fluid connection to a fourth nozzle 140-4 that is in fluid communication with a fourth target surface 150-4.

Figures 1 and 3-7 show that the sensor cleaning system further comprises a fluid source being a tank or reservoir 110. The reservoir 110 is adapted for storing the first fluid, e.g., cleaning liquid.

As shown in figures 3-7, a first pump 130-1 and a second pump 130-2 are arranged in parallel. In operation, the first pump 130-1 and/or the second pump 130-2 is/are adapted for supplying fluid 120 to the manifold 180. The controller 160 is configured to operate the first pump 130-1 and/or the second pump 130-2 by, for example, a PWM (pulse-width modulation) signal. The PWM signal is used to control the speed of the one or more pumps 130-1, 130-2.

Further, the first pump 130-1 and/or the second pump 130-2 receive(s) fluid 120 from the reservoir 110 or from the vehicle external environment (see figure 2). Figures 1 and 3-7 show that the one or more pumps 130 and the reservoir 110 are fluidly connected to each other by one or more conduit pipes 300 (see figure 3 for the reference sign 300). In particular, as shown in figures 3-7, the first pump 130-1 and the reservoir 110 are fluidly connected to each other. Also, the second pump 130-2 and the reservoir 110 are fluidly connected to each other.

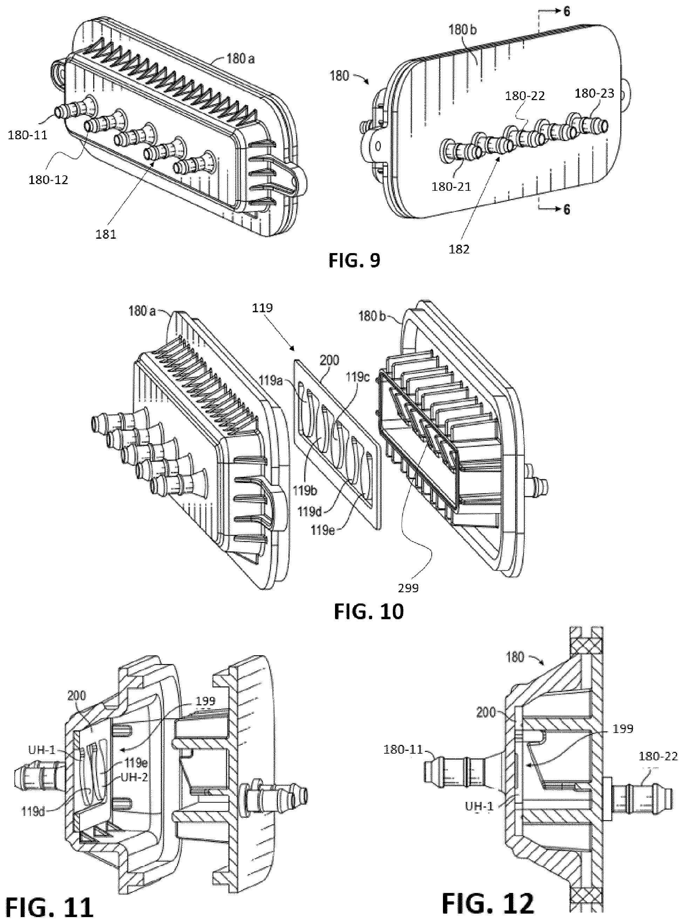

The manifold 180 is a fluid distributor. Figure 3 shows that the manifold 180 comprises a first inlet 180-11 and three outlets 180-21, 180-22, 180-23 (the reference signs are shown in figure 9). The first inlet 180-11 is adapted for receiving fluid at least from the first pump 130-1. It is possible that the manifold 180 is provided with additional inlets such as a second inlet 180-12 (see figures 3-7 and figure 9 for the reference signs). Further information with regards to the manifold 180 will be explained in figures 9-12.

The nozzle 140 or fluid dispenser comprises two or more nozzles 140-1, 140-2, 140-3, 140-4. The two or more nozzles 140-1, 140-2, 140-3, 140-4 are adapted for ejecting fluid to the target surface 150. As shown, the first nozzle 140-1 is in fluid communication with the first target surface 150-1. The second nozzle 140-2 is in fluid communication with the second target surface 150-2. The third nozzle 140-3 is in fluid communication with the third target surface 150-3. If a fourth target surface is required to be cleaned, a fourth nozzle 140-4 is provided in fluid communication with the fourth target surface 150-4 (see figures 1 and 2). In the non-limiting example of figures 3-7, the first and third nozzles 140-1, 140-3 are fixed nozzles (i.e., non-movable nozzles), wherein the second nozzle 140-2 is a telescopic nozzle. The telescopic nozzle is a displaceable device where a second part moves with respect to a first part from a retracted position to an extended position and vice versa, wherein the telescopic nozzle ejects fluid in the extended position, and wherein the telescopic nozzle does not eject fluid in the retracted position. Also, the first and second target surfaces 150-1, 150-2 are camera modules, wherein the third target surface 150-3 is a lidar device.

The two or more nozzles 140-1, 140-2, 140-3, 140-4 are in fluid connection to the manifold 180. In particular, the first nozzle 140-1 is in fluid connection to the first outlet 180-21 of the manifold. The second nozzle 140-2 is in fluid connection to the second outlet 180-22 of the manifold. The third nozzle 140-3 is in fluid connection to the third outlet 180-23 of the manifold. Furthermore, the fourth nozzle 140-4 is in fluid connection to the fourth outlet 180-22 of the manifold when provided (see figures 1 and 2 and figure 9 for the reference signs).

The control valve V comprises two or more control valves V-1, V-2, V-3, V-4 each comprises an electromagnetic valve. Each of the two or more control valves V-1, V-2, V-3, V-4 is configured to move from a close position to an open position and vice versa in a controlled manner by the controller 160.

As shown, a first control valve V-1 is arranged between the manifold 180 and the first nozzle 140-1 including in the manifold 180 or in the first nozzle 140-1. Similarly, a second control valve V-2 is arranged between the manifold 180 and the second nozzle 140-2 including in the manifold 180 or in the second nozzle 140-2. Further, a third control valve V-3 is arranged between the manifold 180 and the third nozzle 140-3 including in the manifold 180 or in the third nozzle 140-3. If the fourth nozzle 140-4 is provided (see figures 1 and 2), the fourth control valve V-4 is arranged between the manifold 180 and the fourth nozzle 140-4 including in the manifold 180 or in the fourth nozzle 140-4.

The controller 160 is configured to operate the one or more pumps 130-1, 130-2 to supply fluid to the manifold 180 and the two or more control valves V-1, V-2, V-3 to switch from the close position to the open position and vice versa. In particular, the controller 160 operates the first control valve V-1, the second control valve V-2, the third control valve V-3, the first pump 130-1, and optionally the second pump 130-2 when provided to supply fluid to the manifold 180 and select at least one selected control valve from among the two or more control valves V-1, V-2, V-3 associated with the target surface(s) 150-1, 150-2, 150-3 required to be cleaned.

The two or more control valves V-1, V-2, V-3 are normally-closed (i.e., in the normally-close position). It prevents fluid 120 to pass through from the manifold 180 to the two or more nozzles 140-1, 140-2, 140-3. The controller 160 is configured to open one or more of the two or more control valves V-1, V-2, V-3 (i.e., the selected control valve(s)) associated to a nozzle that is/are in fluid communication with a target surface 150-1, 150-2, 150-3 where optical contamination is to be removed. For this, the controller 160 selects one or more of the two or more control valves V-1, V-2, V-3 (also explained herein as a selected control valves) on the basis of the sensor signal or command of washing. As a result, a reduction of fluid consumption is advantageously achieved. The sensor signal or command of washing may be triggered manually (e.g., the user or driver presses a button or interacts with an HMI - Human-Machine Interface -), or automatically (e.g., a system that (automatically) detects that the target surface is dirty or at least needs to be cleaned without further interaction of the user or driver).

In a non-limiting example, if optical contamination is unfortunately attached to the first and third target surfaces 150-1, 150-3 then the controller 160 receives or determines a sensor signal where the first and third target surfaces 150-1, 150-3 are required to be cleaned. The controller 160 comprises a memory with pre-saved data indicating the surface size of the two or more target surfaces 150-1, 150-2, 150-3. It should be noted that, for example, a camera module may have a surface size different from a lidar device and therefore the amount of fluid required may be different. Also, the controller 160 comprises data related to the location of the nozzles 140-1, 140-2, 140-3 or at least a distance from the manifold 180. Further, the controller 160 comprises data with the importance / prioritization of the two or more target surfaces 150-1, 150-2, 150-3. According to the sensor signal, the controller 160 opens the selected control valves which in this case is the first and third control valves V-1, V-3. Also, the controller 160 activates the first and/or second pump 130-1, 130-2 depending on the amount of fluid and/or fluid pressure required. The activation of the first and/or second pumps 130-1, 130-2 may occur before or after opening the selected valves or even in the same instant of time. In any case, the rest of the control valves, in this case, the second control valve V-2, remain closed. Fluid 120 is only ejected by the first and third nozzles 140-1, 140-3. In use, optical contamination attached to the first and third target surfaces 150-1, 150-3 is removed by the ejected fluid 120. The second target surface 150-2 is not ejected with fluid 120.

Figures 3 to 7 show that the sensor cleaning system comprises a first upstream valve UV-1. It may optionally comprise a second upstream valve UV-2. The first upstream valve UV-1 is arranged between a fluid outlet of the first pump 130-1 and the manifold 180, including in the fluid outlet of the first pump 130-1 or in the manifold 180 (see figures 9-12). The second upstream valve UV-2 is arranged between a fluid outlet of the second pump 130-2 and the manifold 180, including in the fluid outlet of the second pump 130-2 or in the manifold 180 (see figures 9-12).

In particular, the one or more of the upstream valves UV-1, UV-2 is/are a check valve or one-way valve. Alternatively, in examples, the one or more upstream valves UV-1, UV-2 is/are or comprise a solenoid valve operated by the controller 160. In any case, fluid 120 is allowed to flow towards the manifold 180 but prevented from flowing from the manifold 180 towards the one or more pumps 130-1, 130-2.

As shown in figures 3-7, when the first pump 130-1 and the second pump 130-2 are arranged in parallel, the first and/or the second upstream valve UV-1, UV-2 prevents fluid 120 in the manifold 180 from flowing towards the reservoir 110 when the first or the second pump 130-1, 130-2 is not activated. In a non-limiting example, according to the sensor signal, the first pump 130-1 is activated and the second pump 130-2 is not activated. If so, the second upstream valve UV-2 prevents fluid 120 contained in the manifold 180 from flowing through the second pump 130-2.

As shown in figures 1 to 7, the sensor cleaning system further comprises a return line 170. Further, the sensor cleaning system comprise a release valve 175 provided in the return line 170.

The return line 170 is adapted for allowing fluid 120 to flow out of a cleaning segment. The cleaning segment is defined as a portion of the sensor cleaning system between the two or more pumps 130-1, 130-2 and the nozzles 140-1, 140-2, 140-3. The release valve 175 is arranged in the return line 170. The release valve 175 is configured to allow fluid 120 to pass through thereof in relation to a flow parameter of the fluid 120 in a fluid circuit of the sensor cleaning system, for example, when pressure of the fluid 120 in the fluid circuit is equal to or higher than a pre-defined overpressure value. The fluid circuit is at least one of an upstream circuit of the manifold, a downstream circuit of the manifold, and the manifold 180.

In examples, the return line 170 is at least one fluid line that connects the reservoir 110 and the manifold 180. Said fluid line may comprise one or more pumps 130-1, 130-2 and the first and/or the second upstream valve UV-1, UV-2 when the first pump 130-1 and the second pump 130-2 are arranged in parallel to each other. Said fluid line may further comprise the conduit pipe 300 (see figure 3 for the reference sign). In a non-limiting example, according to the sensor signal, the first pump 130-1 is activated and the second pump 130-2 is not activated. If overpressure unfortunately occurs, the second upstream valve UV-2 acts as a release valve 175 allowing the fluid 120 contained in the manifold 180 to flow through the second pump 130-2.

Alternatively or additionally, figure 3 schematically illustrates that the return line 170 includes a first end fluidly connected to the manifold 180. It allows fluid 120 inside the manifold 180 to flow out of the manifold 180 without being ejected by the two or more nozzles 140-1, 140-2, 140-3. Particularly, the return line 170 fluidly connects the manifold 180 and the reservoir 110. That is, the first end of the return line 170 is fluidly connected and arranged at the manifold 180 and a second end of the return line 170 is fluidly connected and arranged at the reservoir 110. In this way, fluid 120 is advantageously not lost.

Figure 4 schematically illustrates that the first end of the return line 170 is at least fluidly connected and arranged at the conduit hose 310. The conduit hose 310 is arranged therebetween an upstream valve UV-1, UV-2 and the manifold 180 to fluidly connect them to each other. In this way, the return line 170 fluidly connects the manifold 180 to the reservoir 110.

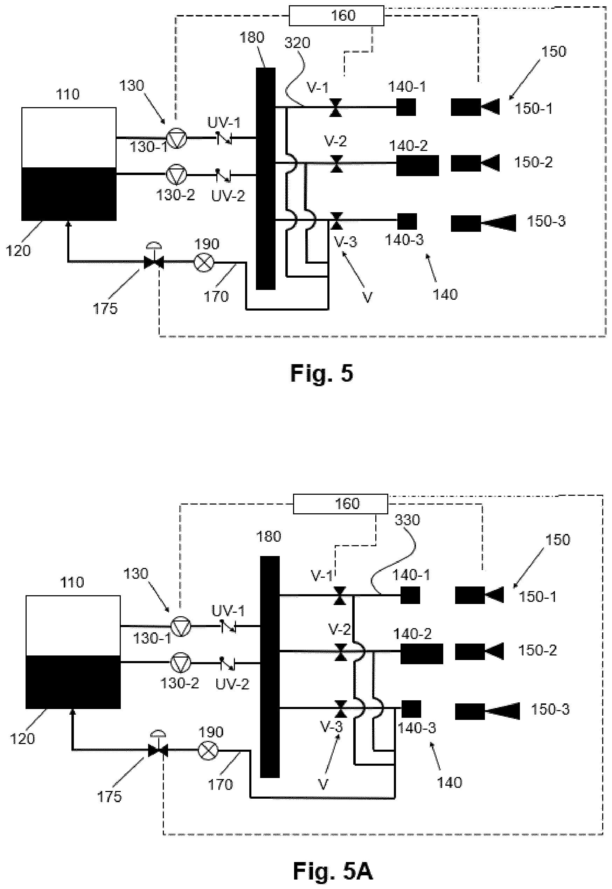

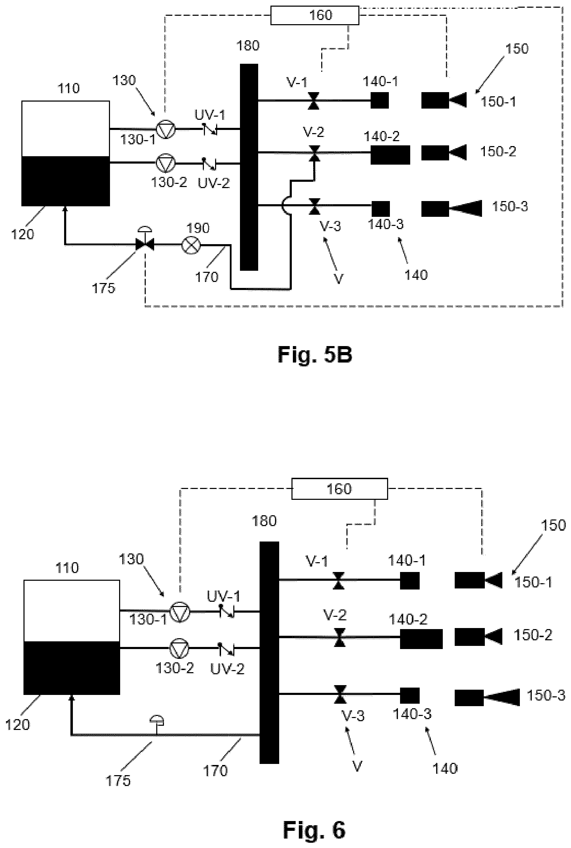

Figure 5 schematically illustrates that the first end of the return line 170 is at least fluidly connected and arranged at a conduit element 320. The conduit element 320 is arranged therebetween the manifold 180 and a control valve V-1, V-2, V-3 to fluidly connect them to each other. In this way, the return line 170 fluidly connects the manifold 180 to the reservoir 110.

Figure 5A schematically illustrates that the first end of the return line 170 is at least fluidly connected and arranged at a conveying element 330. The conveying element 330 is arranged therebetween a control valve V-1, V-2, V-3 and a nozzle 180 to fluidly connect them to each other. Alternatively, figure 5B schematically illustrates that the first end of the return line 170 is arranged at least one of the control valves V-1, V-2, V-3.

For example, when a nozzle 140-2 is a telescopic nozzle, the control valve V-2 comprises a fluid inlet for receiving fluid 120 from the reservoir 110, a first fluid outlet for discharging fluid 120 into the telescopic nozzle 140-2, and a second fluid outlet for allowing fluid 120 to flow back away from the telescopic nozzle 140-2 when retracting from the extended position to the retracted position. Said second fluid outlet of the control valve V-2 is configured for allowing residual fluid trapped within the telescopic nozzle 140-2 to flow back away therefrom when retracting from the extended position to the retracted position. The trapped fluid 120, either within the telescopic nozzle 140-2 or in a section between the telescopic nozzle 140-2 and the control valve V-2, is thus allowed to flow back away from the telescopic nozzle 140-2. It avoids trapped fluid 120 from preventing the telescopic nozzle 140-2 from fully returning to the retracted position. In particular, when the fluid 120 is cleaning liquid and the temperature is below the freezing temperature, the frozen cleaning liquid causes the telescopic nozzle 140-2 to be partially opened, i.e., the telescopic nozzle 140-2 is prevented to reach the retracted position due to the frozen cleaning liquid. In examples, at least one of the control valves, e.g., the second control valve V-2, is a three-way valve.

Figures 3 to 5B schematically illustrate that the release valve 175 includes a solenoid. In this way, the release valve 175 is electrically connected to the controller 160. The controller 160 opens and closes the release valve 175 as described further below. Instead, figure 6 schematically illustrates that the release valve 175 is or comprises a fully mechanical valve, i.e., the controller 160 does not instruct the release valve 175 to open/close, but pressure inside the release valve 175 makes a valve member such as a membrane to move.

In fact, the release valve 175 and/or the above-mentioned one-way valve (either one or more of the upstream valves UV-1, UV-2, UV-3 is/are a mechanical valve(s). In the case that the release vale 175 is a mechanical valve, it allows fluid 120 to flow freely in a first direction (i.e., from the manifold 180 to the reservoir 110 when exceeding a pre-defined overpressure value) while preventing reverse flow in the opposite direction (i.e., from the reservoir 110 to the manifold 180). In the case that a one-way valve is a mechanical valve, it allows fluid 120 to flow freely in a first direction (i.e., from the one or more pumps 130-1, 130-2 towards the manifold 180, while preventing reverse flow in the opposite direction (i.e., from the manifold 180 towards the one or more pumps 130-1, 130-2 when exceeding a pre-defined overpressure value).

The manifold 180 has a manifold pressure understood as a pressure of a fluid circuit comprised therebetween the first control valve V-1, the second control valve V-2, the third control valve V-3 when provided, the release valve 175 when provided, the first pump 130-1 (or the first upstream valve UV-1), and the second pump 130-2 (or the second upstream valve UV-2) when provided.

In examples, the manifold 180 is pressurized. In particular, when the fluid 120 is pressurized gas, the manifold 180 comprises a tank 180' to store the pressurized gas supplied by the air compressor 130 (see figure 2). Hereinafter the term 'air compressor' and `liquid pump' are both assigned to reference sign 130. The tank 180' is part of or attached to the manifold 180. The tank 180' is arranged therebetween the air compressor 130 and one or more control valves V-1, V-2, V-3, V-4. As shown in figure 2, a first end of the return line 170 is arranged downstream the tank 180' and a second end of the return line 170 is arranged upstream the tank 180'. That is, the first end of the return line 170 is arranged between the tank 180' and the control valves V-1, V-2, V-3, and the second end of the return line 170 is arranged between the air compressor 130 and the tank 180'.

The return line 170 may act as a conveyor tube that provides pressurized gas directly from the compressor 130 to the manifold 180 without flowing through the tank 180'. A reason for providing this conveyor tube is that if at any time there is not enough pressurized gas in the tank 180' (or the tank 180' is empty), the pressurized gas generated by the compressor 130 directly provides pressurized gas to the manifold 180' without going through the tank 180'. Another use case where the conveyor tube is advantageous is when there is a need for a very high flow rate. The present invention uses the pressurized gas from the tank 180' at the same time that the compressor 130 also supplies pressurized gas through the conveyor tube thus being able to use the entire volume of gas available.

The one or more pumps 130-1, 130-2 is/are adapted for providing fluid 120 into the manifold 180 to be pressurized such that, in use, the manifold 180, particularly the tank 180' when fluid 120 is pressurized gas, accumulates pressure before the target surfaces 150-1, 150-2, 150-3 are required to be cleaned. In operation, the manifold 180 accumulates pressure when each one of the two or more control valves V-1, V-2, V-3 are in the close position. Also, the first upstream valve UV-1 and the second upstream valve UV-2 (when provided) is/are employed when the manifold 180 is pressurised. The first and/or second upstream valve(s) UV-1, UV-2 prevent fluid 120 in the manifold 180 from flowing away when the manifold 180 is pressurized. Further, the manifold 180 accumulates pressure when the release valve 175 in the return line prevents fluid 120 in the manifold 180 from passing through.

Figures 3-5B schematically illustrate that the release valve 175 includes a solenoid valve. For the purpose of manifold pressurization, the controller 160 is configured to close the first and second control valves V-1, V-2, and the release valve 175 in the return line 170 when provided. As illustrated, the first and the second upstream valves UV-1, UV-2 are check valves.

Figure 6 schematically illustrate that the release valve 175 is a check valve. In this case, the pre-defined overpressure value of the check valve defines the maximum pressure of the fluid 120 in the manifold 180. When the manifold pressure exceeds the pre-defined overpressure value of the check valve, then fluid 120 passes through the check valve of the release valve 175. In the example, the pre-defined overpressure value of the release valve 175 is set to the maximum pressure that it is desired to have in the manifold 180 when pressurized. As described below, a malfunction of a component of the sensor cleaning system may cause an overpressure. For example, the malfunction of the component is at least one of the two or more control valves V-1, V-2, V-3 being broken or at least one of the two or more nozzles 140-1, 140-2, 140-3 being blocked. In the undesired event that overpressure occurs, the pre-defined overpressure value of the release valve 175 defines the maximum pressure of the overpressure. For example, if the pre-defined overpressure value of the release valve 175 is 6 bar, in the event that the first nozzle 140-1 is blocked and the overpressure occurs in the manifold 180, the manifold pressure will never reach the 6 bar of pressure. In fact, the release valve 175 would open at said 6 bars (i.e., at the pre-defined overpressure value), remaining open at least until the pressure drops below said value.

Still with the pressurization of the manifold 180, the accumulated pressure is obtained when the one or more pumps 130-1, 130-2 supply (or have supplied) fluid 120 to the manifold 180, wherein the fluid 120 does not pass through the two or more control valves V-1, V-2, V-3, the one or more upstream valves UV-1, UV-2, and the release valve 175. When the fluid 120 is cleaning liquid, the fluid 120 occupies all or at least part of the manifold 180. When the fluid 120 is pressurized gas, the fluid 120 is stored under pressure in the above-mentioned tank 180' (see figure 2). In any case, the fluid 120 (either cleaning liquid or pressurized gas) is advantageously be stored or trapped within the manifold 180 therebetween the above-mentioned valves or in the tank 180'. In examples, the one or more pumps 130-1, 130-2 is/are adapted for supplying fluid 120:
- for at least a predefined time after the two or more control valves V-1, V-2 are closed so as to ensure the manifold 180 is pressurized to a predetermined pressure level, and/or
- until a sensed pressure in the manifold reaches the predetermined pressure level.

In fact, the controller 160 operates the one or more pumps 130-1, 130-2 and the two or more control valves V-1, V-2, V-3 for the manifold 180 to reach the predetermined pressure level. The predetermined pressure level is up to 8 bar, particularly, up to 6 bar, for example, between 2-6 bar.

The cleaning system may further comprise a fluid sensor 190. The fluid sensor 190 senses at least one of pressure, flow rate, or speed of the fluid 120 and transmits said measurements to the controller 160. In figure 3, the fluid sensor 190 senses pressure, flow rate, or speed of the fluid in the manifold 180 between the upstream valve(s) UV-1, UV-2, the control valve(s) V-1, V-2, V-3, and the release valve 175 when provided. In figure 7, the fluid sensor(s) 190 is/are arranged between the control valve(s) V-1, V-2, V-3 and the nozzle(s) 140-1, 140-2, 140-3. It is still possible that the fluid sensor 190 is arranged downstream the release valve 175, for example, between the release valve 175 and the reservoir 110.

For example, the controller 160 generates, upon the sensor signal, a control signal to the (selected) second control valve V-2 to switch from the close position to the open position, and also instructs the first pump 130-1 to supply fluid to the manifold 180. In this case, when the (selected) second control valve V-2 is damaged and does not open as required, the fluid 120 cannot be ejected through the second nozzle 140-2 and consequently the pressure undesirably increases to an excessive pressure (i.e., overpressure) since the other control valves V-1, V-3 are also closed. Such overpressure may be dangerous and should be avoided. For example, said overpressure may cause damage to the conduit pipes 300, the conduit hose 310, the conduit elements 320, the manifold 180 itself, the one or more pumps 130-1, 130-2, or the control valves V-1, V-2, V-3.

For this purpose, the above-mentioned release valve 175 in the return line 170 is particularly configured to allow fluid 120 to pass through when fluid pressure exceeds the pre-defined overpressure value. As explained above, if the release valve 175 is a one-way valve, the release valve 175 is adapted / designed to only allow fluid 120 to pass through from the manifold 180 to the reservoir 110 when the pressure at the release valve 175 reaches the pre-defined overpressure value. If the release valve 175 is or comprises the solenoid valve, the controller 160 instructs the release valve 175 to open when the fluid sensor 190 senses at least:
(i) a pressure which reaches the pre-defined overpressure value, for example, in the manifold 180 (e.g., the fluid sensor 190 is arranged in the manifold 180);
(ii) a flow parameter of the fluid such as pressure, flow rate, or fluid speed between the control valve(s) V-1, V-2, V-3 and the nozzle(s) 140-1, 140-2, 140-3. E.g., the fluid sensor 190 is arranged between the control valve(s) V-1, V-2, V-3 and the nozzle(s) 140-1, 140-2, 140-3.

In any case, the release valve 175 allows fluid 120 to flow away from a location arranged between the pump(s) 130-1, 130-2 and a nozzle 140-1, 140-2, 140-3. The pre-defined overpressure value is 0.5 bar or more of the pressurization. For example, above six bar such as eight bar or more. Said pre-defined overpressure value (indicative of system overpressure) is greater than the predetermined pressure level (for the manifold pressurization).

If the fluid 120 is pressurized gas, it is possible that fluid 120 is expelled through the one or more nozzles 140-1, 140-2, 140-3 when occurs overpressure. For this, the controller 160 is configured to open one or more control valves V-1, V-2, V-3. If the pressurized gas is pressurized in the tank 180' (shown in figure 2) at a pressure equal to or higher than the pre-defined overpressure value then the controller 160 switches one or more control valves V-1, V-2, V-3 from the close position to the open position so as to reduce the pressure of the tank 180'.

The pressurization of the sensor cleaning system occurs before the target surface 150 is required to be cleaned, but after the motor vehicle is started. Therefore, when the ignition is off, there is no pressurization. Particularly, when the ignition is turned off, then the sensor cleaning system starts the depressurization. For this, the controller 160 is configured to receive a vehicle signal indicating that the ignition of the motor vehicle is turned off. Then, the controller 160 allows pressurized gas to flow out the manifold 180, e.g., the tank 180', for example, through nozzles 140-1, 140-2, 140-3 at least by opening one or more control valves V-1, V-2, V-3. When the motor vehicle is off and there is no pressure in the cleaning system, the controller 160 sets all control valves V-1, V-2, V-3 in the close position.

Gas pressurization tends to increase the temperature of the gas. It is undesirable to have high temperature of the fluid 120. If the temperature of the gas exceeds a pre-established gas temperature, the controller 160 is configured to reduce the pressure of the cleaning system, for example, the manifold 180, e.g., the tank 180'. For this, the sensor cleaning system further comprises a fluid temperature sensor 178 to measure the temperature of the fluid 120, e.g., the pressurized gas. The fluid temperature sensor 178 is arranged in the manifold 180, for example, in the tank 180' when the fluid 120 is pressurized gas (see figure 2) but could be arranged in any position between the compressor 130 and the valves V, including them. The fluid temperature sensor 178 is electrically connected to the controller 160. The controller 160 is configured to receive or determine the temperature of the pressurized gas in the manifold 180, e.g., the tank 180'. If the temperature of the pressurized gas is equal to or above than the pre-established temperature, the controller 160 is configured to stop the air compressor 130 and/or establishing a fluid connection between the manifold 180, e.g., the tank 180', and one or more nozzles 140-1, 140-2, 140-3 to cause the pressurized gas to be expelled out of the sensor cleaning system. In examples, said fluid connection is obtained by at least switching one or more control valves V-1, V-2, V-3 from the close position to the open position. As a consequence, the pressure of the pressurized gas decreases and so does its temperature. The pre-established temperature may be fixed at 80°C although a different value is of course possible. Further, the controller 160 instructs one or more control valves V-1, V-2, V-3 to close again, for example, when the temperature has decreased below the preset temperature, or after a preset time, or after a certain decrease of pressure of the pressurized gas.

It is important to determine whether the nozzle 140 is blocked or not at least because of the following reasons. First, if the nozzle 140 is blocked, then the target surface 150 may not end up being cleaned as required. Secondly, if the pump 130 is activated when the nozzle 140 is blocked, the cleaning system (e.g., the manifold 180) may suffer overpressure.

There may be different reasons for blockage of the nozzle 140. A reason may be that remaining droplets of cleaning liquid remain in the nozzle 140 after fluid 120 is ejected and when the temperature drops, they freeze, forming an obstruction made of ice. Instead of remaining droplets of cleaning liquid, there may be water of the vehicle exterior environment such as rain o moisture. Other reasons are of course possible such as foreign matter (i.e., dirt) may be attached to the nozzles 140-1, 140-2, 140-3.

The controller 160 is configured to determine at least one of:
- if there is a pump 130-1, 130-2 that does not operate as required;
- if there is a control valve V-1, V-2, V-3 that does not operate as required; and
- if there is a nozzle 140-1, 140-2, 140-3 that is totally or at least partially blocked or obstructed.

The controller 160 is configured to receive a signal or determine if one or more pumps 130-1, 130-2, 130-3 operate as required on the basis of the consumed power, for example, voltage and intensity, or based on rotational speed. In some examples, the one or more pumps 130-1, 130-2, 130-3 may send a signal indicating the status thereof.

The controller 160 can receive a signal or determine if one or more control valves V-1, V-2, V-3 operate as required. In some examples, the one or more control valves V-1, V-2, V-3 may send a signal indicating the status thereof.

The controller 160 is at least further configured to determine blockage of the nozzle 140 based at least on the status of the pump 130, the status of the control valve V-1, V-2, V-3, and the flow parameter of the fluid, for example, one of pressure, flow rate and fluid speed. If the pump 130 operates as required (no malfunction), the control valve V-1, V-2, V-3 operates as required (no malfunction) and there is:
- an increase of pressure in the manifold 180 between the pump 130 and the nozzle 140; or
- a flow parameter of the fluid downstream the release valve 175 different from zero (i.e., between the release valve 175 and the reservoir 110);
then, the controller 160 is configured to determine that the nozzle is at least partially blocked. The flow parameter of the fluid downstream the release valve 175 is particularly flow rate or fluid speed when the release valve 175.

Particularly, the controller 160 is further configured at least to determine blockage of the nozzle 140 based at least on:
(i) the determined pressure of the fluid 120 at least in the manifold 180 and at least one of:
   1. the status of the control valve(s) V-1, V-2, V-3, and
   2. the determined pressure, flow rate, or fluid speed between the control valve(s) V-1, V-2, V-3 and the nozzle(s) 140-1, 140-2, 140-3;
(ii) the status of the control valve(s) V-1, V-2, V-3 and at least one of:
   1. the determined pressure of the fluid at least in the manifold 180, and
   2. the determined pressure, flow rate, or fluid speed through the return line 170, for example, downstream the release valve 175 (e.g., between the release valve 175 and the reservoir 110), for example, the determined flow rate, or fluid speed when the return-valve 175 is or comprises the one-way valve.

The controller 160 is configured to generate an output that comprises at least one of:
(a) activating a heater associated to the nozzle 140 when the sensed temperature is below a pre-saved temperature;
(b) activating / deactivating an autonomous driving instruction; and
(c) providing an alarm to the user or driver.

The pre-saved temperature may be loaded in the memory of the controller 160. The sensed temperature may be a temperature of the vehicle exterior environment. The sensed temperature may be below 5°C. Particularly, equal to or below 0°C. That is, if the controller 160 determines that the nozzle 140 is blocked / obstructed, and the sensed temperature is, for example, -5°C (below the pre-saved temperature), the controller 160 generates an output to activate the heater associated to the nozzle 140 to warm up the nozzle. The aim is to dissolve the ice blockage of the nozzle 140.

As stated above, the controller 160 is configured to receive or determine a sensor signal or command of washing. The sensor signal comprises a detection of the optical contamination on the target surface 150 or at least the need to clean the target surface 150. In particular, the sensor signal further comprises an ambient condition parameter and/or a motor vehicle parameter.

Figure 8 shows that the ambient condition parameter comprises: level of rain 301, ambient temperature 302, ambient humidity 303, wind speed, and/or wind direction. Further, the motor vehicle parameter comprises: a motor vehicle speed 304, vehicle altitude location 305, and/or global positioning.

Still referring to figure 8 (upper left side), the controller 160 receives and/or sends data when fluid 120 is cleaning liquid to the following sensors or devices: the pump 130 being the liquid pump, the release valve 175, the fluid sensor 190, and a fluid reservoir level sensor 179. Also, as illustrated in the upper right side, the controller 160 receives data when fluid 120 is pressurized gas by the following sensors or devices: the pump 130 being the air compressor, the fluid temperature sensor 178, the fluid sensor 190 being, for example, a pressure sensor, comprising, for example, a first pressure sensor arranged, in the tank 180' and/or a second pressure sensor arranged between the second end of the return line 170 and the control valves V-1, V-2, V-3. As explained above, it is possible to arrange the fluid sensor 190 between the control valves V-1, V-2, V-3 and the nozzles 140-1, 140-2, 140-3. Figure 8 further shows (bottom side) that the controller 160 operates the control valves V of both the cleaning liquid discharging system and the pressurized gas discharging system.

With the above-mentioned data, the controller 160 is configured to:
- evaluate the sensor signal to select a predetermined cleaning profile from a plurality of predefined cleaning profiles based on the sensor signal, and
- operate the control valves V-1, V-2, V-3 and/or the pumps 130-1, 130-2 depending on the selected predetermined cleaning profile in order to remove the optical contamination of the target surface 150.

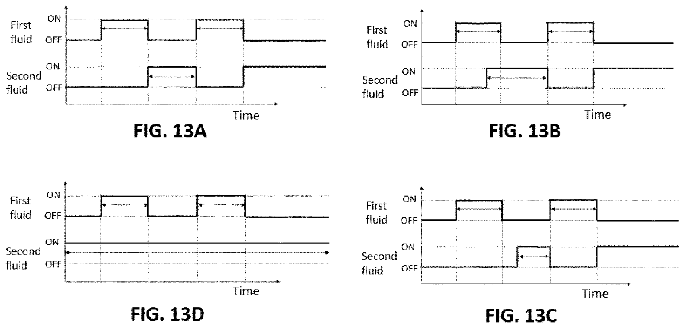

Figures 13A-13C show that the fluid 120, either cleaning liquid and/or pressurized gas, is ejected with a pulse. For this, the controller 160 is configured to operate the selected control valve from the control valves V-1, V-2, V-3 for the nozzle 140-1, 140-2, 140-3 associated with the selected control valve to eject fluid 120 to the target surface 150 at an alternating pulse. The pulse or alternating pulse is defined as a non-continuous jet of fluid 120 and obtained by opening and closing the selected control valve in a sequence manner: opening ON, closing OFF, opening ON and closing OFF. The sequence (cleaning cycle) may be repeated N times as required. The opening ON has a duration of between 0.1 and 0.5 seconds, the amount of fluid ejected during the opening ON being of between 0.2 and 5 cm3. Particularly, when the target surface 150 to be cleaned is a (portion of a) camera module, more than 2 cm3 of cleaning liquid is required, e.g., 2-6 cm3, wherein less than 0.1 liters is used if pressured gas is employed. When the target surface 150 to be cleaned is a (portion of a) lidar, more than 5 cm3 of cleaning liquid is required, e.g., 5-12 cm3, wherein less than 0.5 liters is used if pressured gas is employed. Figure 13A illustrates that the pressurized gas is ejected ON2 when the cleaning liquid is prevented OFF1. Similarly, figure 13B illustrates that the pressurized gas is ejected ON2 before the cleaning liquid is prevented OFF1. Similarly, figure 13C illustrates that the pressurized gas is ejected ON2 after the cleaning liquid OFF1 is prevented. In any case, the pressurized gas is ejected ON2 at least in an instant of time where the cleaning liquid is not ejected OFF1. It dries the cleaning liquid previously ejected on the target surface 150.

Figure 13D shows a possible non-limiting example where the cleaning liquid is pulsed and the pressurized gas is ejected in a continuous manner, i.e., not pulsed.

In examples, the first ON2 lasts a smaller time and has a fluid volume greater than the second ON2, particularly when pressurized gas is used, the second ON2 being an ejection after first ON2.

Figure 9 shows a manifold 180 comprising a manifold chamber body defining a body therein. The manifold chamber comprises two housing parts 180a, 180b that can be attached one another so as to define an inner space therein. First housing part 180a defined an inlet housing portion and second housing part 180b defines an outlet housing part. As shown in the example, the manifold chamber has five inlets manifold 181 into which the fluid 120 is gathered from the pumps 130-1, 130-2, and five outlets manifold 182 from which the fluid 120 is distributed towards the target surfaces 150-1, 150-2, 150-3, 150-4.

Figures 10, 11, and 12 show a manifold 180 comprising the upstream valve UV, e.g., the check valve, therein. As stated above, the at least one check valve UV-1, UV-2 is arranged within the manifold 180, wherein the check vale UV-1, UV-2 attached to the manifold 180, or alternatively (not shown), is an integral part of thereof. In particular, the manifold chamber comprises a housing that includes, in turn, an inner surface configured to receive at least a portion of the check valve UV-1, UV-2 such that, in use, the first manifold chamber and the check-valve UV-1, UV-2 are attached to each other.

Figures 10, 11, and 12 show the upstream valve UV as a check valve assembly 199 comprising a frame 200 and five movable portions 119a, 119b, 119c, 119d, and 119e integrally formed with the frame 200. The frame 200 and five movable portions are formed from a resilient or flexible material such as rubber, silicone, plastic, and combinations thereof. In use, the frame 200 is attached to the inner surface of the inlet housing part 180a. In particular, the upstream valve UV comprises a flexible membrane. Further, each movable portion 119a-119e is a deformable portion.

The upstream valve UV is configured to have an open position and a closed position. As shown in figure 11, the close position prevents backflow towards the one or more pumps 130-1, 130-2. Particularly when the manifold 180 has two or more inlets.

In the open position (see figure 12), the fluid 120 in the first manifold chamber causes one or more of the movable portions 119a-119e to turn on an axis such that the manifold chamber is configured to distribute the fluid 120 towards at least one nozzle 140-1, 140-2, 140-3, 140-4. That is, fluid pressure causes the one or more deformable portions 119a-119e to turn on an axis when the fluid 120 flows through.

Figures 10-12 show the manifold housing comprising a second inner surface or travel limiter 299 configured to abut the upstream valve UV-1 in the open position to restrict the movement of the deformable portion. In the open position, the deformable portion of the upstream valve UV has an angle of between 5°-60° with respect to the closed position. Particularly, an angle of between 10°-45°. More particularly, an angle of between 15°-30°. Travel limiter 299 establishes a selected dwell or response time for upstream valve UV.

The example of figure 1 (cleaning liquid discharging system) and the example of figure 2 (pressurized gas discharging system) may be combined into one single sensor cleaning system.

A method of operation of the sensor cleaning system comprises:

When the motor vehicle is not yet started, there is no pressurization of the sensor cleaning system. Further, the control valves V-1, V-2, V-3, V-4 are in the close position. When the motor vehicle is started (i.e., the ignition is turned on), the sensor cleaning systems starts the pressurization process. Particularly, the controller 160 receives the vehicle signal indicating that the ignition of the motor vehicle is turned on. Then, the controller 160 operates one or more pumps 130, e.g., the liquid pump and the air compressor. The manifold 180 is thus pressurized. For example, the pressurized gas is pressurized in the tank 180' up to the predetermined pressure level, being for example, 3.5 bar. For pressurization purposes of the cleaning liquid, the control valves V-1, V-2, V-3, the release valve 175 and the upstream valves UV-1, UV-2 allow cleaning liquid 120 to be trapped inside the manifold 180. That is, they allow cleaning liquid to enter the manifold 180 but not to flow out. For pressurization purposes of the pressurized gas, a pressure reducer PR is provided at or near an outlet of the tank 180' allowing pressurized gas to be accumulated into the tank 180'. That is, the pressurized reducer PR is adapted for preventing the pressurized gas from flowing out unless the pressurized gas reaches the pre-defined overpressure value. Alternatively, if the pressure reducer PR is not provided, the control valves V-1, V-2, V-3, V-4 prevent the pressurized gas to flow out of the manifold 180 unless the pressurized gas reaches the pre-defined overpressure value.

When the motor vehicle is in operation, a controller 160 receives the command of washing or sensor signal indicative that, for example, the second target surface 150-2 is dirty. The second target surface 150-2 is, for example, the right camera module of the surrounding view system. The sensor signal further comprises data of level of rain 301. Additionally, the sensor signal comprises data of the motor vehicle speed 304 as well as other possible external or vehicle signals.

The controller 160 selects the predetermined cleaning profile based at least on the level of rain 301, and the motor vehicle speed 304 as well as size of the second target surface 150-2.

The controller 160 selects the selected control valve which is, in this example, the second control valve V-2. Further, the controller 160 instructs the selected control valve V-2 to open ON. The other control valves V-1, V-3 remain in the close position. Fluid pressure and/or the duration of ON are based on the predetermined cleaning profile. If high pressure of fluid 120 is required, the controller 160 instructs, by the PWM signal, the pumps 130 to provide greater fluid pressure. Two or more pumps 130-1, 130-2 may be operated if required. Fluid pressure supplied by the pumps 130-1, 130-2 is controlled by, for example, the PWM signal.

The controller 160 operates the selected control valve V-2 and/or the pumps 130-1, 130-2 for ejecting cleaning liquid and/or pressurized gas at alternating pulse, e.g., ON-OFF of the selected control valve V-2 repeated N times, being N two or more. Particularly, the operation of the selected control valve V-2 and/or the pumps 130-1, 130-2 depend on the selected predetermined cleaning profile.

Once the cleaning of the second target surface 150-2 is completed, the sensor cleaning system starts again the pressurization process as described above. Then, it is ready for any subsequent cleaning process.

The pressurized gas tends to increase in temperature when compressed in the tank 180'. When the controller 160 receives or determines that the fluid temperature sensed by the fluid temperature sensor 178 is equal to or above than the pre-established temperature, the controller 160 opens the pressure reducer PR and even the control valves V-1, V-2, V-3 for the pressurized gas to flow out of the sensor cleaning system.

It is possible that the controller 160 determines leaks of the cleaning system by sensing (e.g., by the fluid sensor 190) a drop in pressure (over time) when the cleaning system (e.g., the manifold) is pressurized. If the drop in pressure is greater than X bar for a preset time, the controller 160 generates an indication that the cleaning system suffers a leak. If there is no leak, the controller 160 assumes that the fluid pressure will remain constant when the pressurization is completed and before starting a depressurization or discharge.

The controller 160 determines in real-time if there exists blockage of a nozzle 140-1, 140-2, 140-3. For this, the fluid sensor 190 senses pressure, speed, and/or flow rate of the fluid 120 in the fluid circuit. Also, the controller 160 determines or receives the status of the selected control valve V-2, i.e., whether the selected control valve V-2 is operating as expected or not. Additionally, the controller 160 determines or receives the status of the operated pumps 130-1, 130-2, i.e., whether the operated pumps 130-1, 130-2 are operating as expected or not. If the operated pumps 130-1, 130-2 and the selected control valve V-2 work well (not malfunctioning), the controller 160 determines that the second nozzle 140-2 is blocked.

The controller 160 generates an output when the second nozzle 140-2 is blocked. The output is at least one of activating / deactivating the autonomous driving instruction, and providing the alert to the user or driver. Also, the controller 160 determines or receives the temperature of the ambient temperature 302. If it is below the pre-saved temperature, the controller 160 activates at least the heater associated to the second nozzle 140-2.

In use, when overpressure occurs, the cleaning liquid flows through the release valve 175. That is, if the second nozzle 140-2 is blocked and the pumps 130-1, 130-2 are supplying cleaning liquid, the pressure of the cleaning liquid increases until reaching the pre-defined overpressure value. From this pressure value, the cleaning liquid flows through the release valve 175. Therefore, the cleaning liquid is allowed to flow out of the cleaning segment. When the pressurized gas causes overpressure, the controller 160 opens the pressure reducer PR. The pressurized gas flows out of the tank 180'. Additionally, the controller 160 opens the pressure reducer PR. The pressurized gas flows out of the tank 180'. Additionally, the controller 160 opens the pressure reducer PR and one or more control valves V-1, V-2, V-3, V-4. The pressurized gas flows out of the sensor cleaning system through one or more nozzles 140-1, 140-2, 140-3, 140-4. In any case, the controller 160 instructs the pumps 130-1, 130-2 to stop supplying fluid 120.

The sensor cleaning system performs the depressurization process when the motor vehicle is off.

Although only a number of examples of said fluid dispensing system, arrangement and washing method have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. Reference signs related to drawings placed in parentheses in a claim are solely for attempting to increase the intelligibility of the claim, and shall not be construed as limiting the scope of the claim.

## Claims

1. A cleaning system for a motor vehicle comprising:
- a pump (130);
- a manifold (180) comprising a first inlet and two or more outlets, the first inlet is adapted for receiving fluid (120) at least from the pump (130);
- a nozzle (140) adapted for ejecting fluid (120) to a target surface (150), the nozzle (140) being in fluid connection at least to one or more outlets of the manifold;
- a control valve (V) arranged between the manifold (180) and the nozzle (140), including in the manifold (180) or in the nozzle (140); and
- a controller (160) configured at least to operate:
∘ the pump (130) to supply fluid (120), and
∘ the control valve (V) to switch from a close position to an open position and vice versa, wherein the control valve (V) is normally in the close position, and wherein the controller (160) is configured to open the control valve (V) in fluid communication with the target surface (150) that is required to be cleaned.

2. The cleaning system of claim 1, wherein the controller (160) is configured at least to determine or receive:
- a status of the control valve (V), and
- optionally, a status of the pump (130);
wherein the controller (160) is further configured at least to determine blockage of the nozzle (140) based at least on
(i) a flow parameter of the fluid (120) in a fluid circuit of the cleaning system;
(ii) the status of the control valve (V); and
(iii) optionally, the status of the pump (130).

3. The cleaning system of claim 2, wherein it further comprises a fluid sensor (190) configured to sense at least one measurement of the flow parameter of the fluid (120) in the fluid circuit of the cleaning system.

4. The cleaning system of any preceding claim, wherein it further comprises a return line (170) for allowing fluid (120) to flow out of a cleaning segment, the cleaning segment being defined as a portion of the cleaning system between the pump (130) and the nozzle (140), and wherein the cleaning system further comprises a release valve (175) arranged in the return line (170), wherein the release valve (175) is configured to allow fluid (120) to pass through thereof in relation to a flow parameter of the fluid (120) in a fluid circuit of the cleaning system.

5. The cleaning system of claims 2-4, wherein the fluid circuit is at least one of:
- an upstream circuit of the manifold;
- a downstream circuit of the manifold; and
- the manifold (180),
and wherein the flow parameter of the fluid (120) is at least one of pressure, speed of the fluid, and flow rate.

6. The cleaning system of claims 4-5, wherein the release valve (175) is configured to allow fluid (120) to pass through thereof when pressure of the fluid (120) in the fluid circuit is equal to or higher than a pre-defined overpressure value.

7. The cleaning system of claim 6, wherein the release valve (175) is an electro-valve, and wherein the controller (160) is configured to open the release valve (175) during a pre-saved time period or based on the flow parameter of the fluid (120) until the pressure of the fluid (120) in the fluid circuit is lower than the pre-defined overpressure value or a predetermined pressure level.

8. The cleaning system of any preceding claim, wherein the pump (130) is adapted for providing fluid (120) into the manifold (180) to be pressurized such that, in use, the cleaning system accumulates pressure before the target surface (150) is required to be cleaned, optionally, to a predetermined pressure level, wherein the pre-defined overpressure value is at least 0.5 bar higher than the predetermined pressure level.

9. The cleaning system of claim 4, wherein the fluid (120) is pressurized gas, wherein the cleaning system further comprises a fluid temperature sensor (178) configured to sense a temperature of the pressurized gas, wherein the controller (160) is further configured to determine if the temperature of the pressurized gas is equal to or above a pre-established gas temperature for the controller (160) to stop the pump (130) and/or open at least one of the control valve (V), the release valve (175), or a pressure reducer (PR) for allowing pressurized gas to flow out of the fluid segment so as to reduce the pressure of the pressurized gas in the cleaning system and the temperature thereof.

10. The cleaning system of any preceding claim, wherein it further comprises an upstream valve (UV) arrange therebetween the pump (130) and the manifold (180), including in the pump (130) or in the manifold (180), wherein the control valve (V) comprises a first control valve (V-1) and a second control valve (V-2), wherein the nozzle (140) comprises a first nozzle (140-1) and a second nozzle (140-2), wherein the first control valve (V-1) is arranged between the manifold (180) and the first nozzle (140-1), including in the manifold (180) or in the first nozzle (140-1), wherein the second control valve (V-1) is arranged between the manifold (180) and the second nozzle (140-2), including in the manifold (180) or in the second nozzle (140-2), wherein, in use, the manifold (180) accumulates pressure
- when the first control valve (V-1) and the second control valve (V-2) are in the close position,
- optionally, when the upstream valve (UV) prevents fluid (120) from the manifold (180) to the pump (130), and
- optionally, when the release valve (175) prevents fluid (120) in the cleaning segment from flowing through the release valve (175) when a pressure is lower than the pre-defined overpressure value.

11. The cleaning system of any preceding claim, wherein the controller (160) is configured to operate the control valve (V) for the nozzle (140) to eject fluid (120) to the target surface (150) at an alternating pulse, optionally, the ejected fluid (120) being previously pressurized at least in the cleaning system, particularly, in the manifold (180).

12. The cleaning system of any preceding claim, wherein the controller (160) is configured to
- receive or determine a sensor signal, wherein the sensor signal comprises a detection of the optical contamination on the target surface (150) and optionally at least one of an ambient condition parameter and a motor vehicle parameter,
- evaluate the sensor signal to select a predetermined cleaning profile from a plurality of predefined cleaning profiles based on the sensor signal, and
- operate the control valve (V) and/or the pump (130) in continuous or alternating pulse mode depending on the selected predetermined cleaning profile in order to remove the optical contamination of the target surface (150).

13. The cleaning system of claims 11 and 12, wherein the controller (160) is configured to select a predetermined speed and/or duration of the alternating pulse from the plurality of predefined cleaning profiles.

14. The cleaning system of claim 13, wherein the controller (160) is configured to determine an optical contamination type that is comprised or derived from the sensor signal, wherein the optical contamination type comprises a first type which contains water and a second type which does not contain water and wherein the controller (160) is configured to select a predetermined speed and/or duration of the alternating pulse from a plurality of predefined pulse speeds based at least on the determined first or second optical contamination types.

15. A method of operation for a cleaning system comprising:
- providing a control valve (V) to be in a normally-close position, the control valve (V) being in fluid connection to a nozzle (140) and arranged between a manifold (180) and the nozzle (140) including in the nozzle (140) or in the manifold (180);
- operating a pump (130) to supply fluid (120) to the manifold (180), optionally, the pump (130) being operated by a pulse-width modulation (PWM) signal;
- optionally, accumulating fluid (120) in the cleaning system, particularly in the manifold (180), which preferably comprises supplying fluid (120) into the manifold (180) before the target surface (150) is required to be cleaned, and at least when the control valve (V) is in the close position;
- receiving or determining a sensor signal, wherein the sensor signal comprises a detection of an optical contamination on the target surface (150) and optionally at least one of an ambient condition parameter, a motor vehicle parameter, and a user interaction;
- optionally, evaluating the sensor signal to select a predetermined cleaning profile from a plurality of predefined cleaning profiles based on the sensor signal;
- optionally, determining, by the controller (160), the amount of fluid (120) and/or fluid pressure required to clean the target surface (150);
- selecting a selected control valve (V-1, V-2, V-3) in fluid connection to a nozzle (140-1, 140-2, 140-3) that is in fluid communication with the target surface (150) required to be cleaned;
- opening the selected control valve (V-1, V-2, V-3) for ejecting fluid (120) so as to remove the optical contamination on the target surface (150), optionally, the selected control valve (V-1, V-2, V-3), and/or an upstream valve (UV), and/or the pump (130) cause the nozzle to eject fluid (120) at an alternating pulse, preferably, the opening of the selected control valve (V-1, V-2, V-3) and/or the operation of the pump (130) depend on the selected predetermined cleaning profile;
- optionally, sensing a flow parameter of the fluid (120) in a fluid circuit, for example, the flow parameter of the fluid (120) being pressure, speed, and/or flow rate;
- optionally, providing a release valve (175) arranged in a return line (170), wherein the release valve (175) allows fluid (120) to pass through in relation to the flow parameter of the fluid (120), preferably, the fluid (120) is allowed to flow out of a cleaning segment, the cleaning segment being defined as a portion of the cleaning system between the pump (130) and the nozzle (140), when pressure in the fluid circuit is equal to or above a pre-defined overpressure value;
- optionally, determining or receiving a status of the control valve (V);
- optionally, determining or receiving a status of the one or more pumps (130-1, 130-2);
- optionally, determining blockage of the nozzle (140) based at least on
(i) the sensed flow parameter of the fluid (120),
(ii) the status of the control valve (V); and
(iii) optionally, the status of the pump (130);
- optionally, sensing a temperature; and
- optionally, generating an output that comprises at least one of:
(a) activating a heater associated to the nozzle when the sensed temperature is below a pre-saved temperature;
(b) activating / deactivating an autonomous driving instruction;
(c) providing an alert to the user or driver of the motor vehicle;
- optionally, sensing a temperature of the fluid (120), the fluid (120) being pressurized gas;
- optionally, determining if the temperature of the pressurized gas is equal to or above a pre-established gas temperature and, if so,
- optionally, allowing pressurized gas to flow out of the fluid segment and/or stopping the pump (130) to reduce the pressure of the pressurized gas in the cleaning system and the temperature thereof.
